# EUROPEAN PATENT APPLICATION

(11) **EP 4 268 611 A1**
(43) Date of publication of application: **01.11.2023**
(21) Application number: 21910910.5
(22) Date of filing: 22.12.2021
(51) Int. Cl.: A23L 27/00, A23L 2/60

(54) **PRODUCTION METHOD FOR STEVIOL GLYCOSIDE SOLUTION**

(30) Priority: 24.12.2020 JP 2020215000
(71) Applicant: Suntory Holdings Limited, Osaka 530-8203 (JP)
(72) Inventor: MITSUI, Ryoki, Soraku-gun, Kyoto 619-0284 (JP); OHKURI, Tadahiro, Kawasaki-shi, Kanagawa 211-0067 (JP); YOKOO, Yoshiaki, Kawasaki-shi, Kanagawa 211-0067 (JP)
(74) Representative: Mewburn Ellis LLP
(86) International application number: PCT/JP2021/047717
(87) International publication number: WO 2022/138770

(57) **Abstract**

There has been a demand for a novel method for producing a steviol glycoside solution. There also has been a demand for a novel beverage precursor and a technique of suppressing the foaming of a steviol glycoside solution. The present invention provides a method for producing a steviol glycoside solution, comprising adding, to a solvent, steviol glycoside and 0.5 to 25 parts by weight of D-allulose per 100 parts by weight of the solvent.

## Description

### Technical Field

The present invention relates to a method for producing a steviol glycoside solution, a beverage precursor comprising steviol glycoside and D-allulose, and a method for suppressing the foaming of a steviol glycoside solution.

### Background Art

The leaves of stevia (*Stevia rebaudiana*) of the family *Compositae* contain a secondary metabolite called steviol, one kind of diterpenoid. Steviol glycoside exhibits approximately 300 times the sweetness of sugar and is therefore used as a calorie-less sweetener in a food industry. Obesity is internationally expanding as a serious social problem. Also from the viewpoint of the advancement of health and reduction in medical care cost, a demand for calorie-less sweeteners is growing with each passing day. Although artificially synthesized amino acid derivatives aspartame and acesulfame potassium are currently used as artificial sweeteners, naturally occurring calorie-less sweeteners such as steviol glycoside are expected to be safer and to easily gain public acceptance.

Meanwhile, steviol glycoside, when blended into an oral composition such as a beverage, is known to influence the foaming of the oral composition (e.g., Patent Literature 1 to 3).

### Citation List

### Patent Literature

Patent Literature 1: Japanese Patent Laid-Open No. 2017-121187
Patent Literature 2: Japanese Patent Laid-Open No. 2020-178710
Patent Literature 3: Japanese Patent Laid-Open No. 2020-188809

### Summary of Invention

### Technical Problem

The present invention provides a novel method for producing a steviol glycoside solution. The present invention also provides a novel beverage precursor and a method for suppressing the foaming of a steviol glycoside solution.

### Solution to Problem

The present invention includes an invention of the following aspects.
[1] A method for producing a steviol glycoside solution, comprising
   adding, to a solvent, steviol glycoside and 0.5 to 25 parts by weight of D-allulose per 100 parts by weight of the solvent.
[2] The method according to [1], wherein a content of the steviol glycoside in the steviol glycoside solution is 100 to 5000 ppm.
[3] The method according to [1] or [2], wherein a weight ratio of D-allulose/steviol glycoside in the steviol glycoside solution is 1 to 2500.
[4] The method according to any one of [1] to [3], further comprising diluting the steviol glycoside solution.
[5] The method according to any one of [1] to [4], wherein the steviol glycoside is one or more selected from the group consisting of rebaudioside A, rebaudioside B, rebaudioside C, rebaudioside D, rebaudioside E, rebaudioside F, rebaudioside G, rebaudioside I, rebaudioside J, rebaudioside K, rebaudioside M, rebaudioside N, rebaudioside O, rebaudioside Q, rebaudioside R, dulcoside A, dulcoside C, rubusoside, steviol monoside, steviol bioside, and stevioside.
[6] The method according to [5], wherein the steviol glycoside comprises rebaudioside M, and a purity of the rebaudioside M is 50 to 99.9% by weight.
[7] The method according to [5] or [6], wherein a total content of the rebaudioside M in the steviol glycoside solution is 100 to 5000 ppm.
[8] The method according to any one of [1] to [7], wherein the steviol glycoside solution is a food or drink product.
[9] The method according to [8], wherein the food or drink product is a beverage.
[10] A beverage precursor comprising steviol glycoside and D-allulose, wherein
   100 to 5000 ppm of the steviol glycoside and 0.5 to 25% by weight of the D-allulose are contained based on the total weight of the beverage precursor.
[11] The beverage precursor according to [10], wherein a weight ratio of D-allulose/steviol glycoside in the beverage precursor is 1 to 2500.
[12] The beverage precursor according to [10] or [11], wherein the steviol glycoside is one or more selected from the group consisting of rebaudioside A, rebaudioside B, rebaudioside C, rebaudioside D, rebaudioside E, rebaudioside F, rebaudioside G, rebaudioside I, rebaudioside J, rebaudioside K, rebaudioside M, rebaudioside N, rebaudioside O, rebaudioside Q, rebaudioside R, dulcoside A, dulcoside C, rubusoside, steviol monoside, steviol bioside, and stevioside.
[13] The beverage precursor according to [12], wherein the beverage precursor comprises rebaudioside M, and a purity of the rebaudioside M is 50 to 99.9%.
[14] The beverage precursor according to [12] or [13], wherein a content of the rebaudioside M in the beverage precursor is 100 to 5000 ppm.
[15] A beverage comprising the beverage precursor according to any one of [10] to [14] and a diluent.
[16] A method for suppressing the foaming of a steviol glycoside solution, comprising adding, to the solution, 0.5 to 25 parts by weight of D-allulose per 100 parts by weight of the solution.

### Advantageous Effects of Invention

The present invention provides a novel method for producing a steviol glycoside solution, a beverage precursor comprising steviol glycoside and D-allulose, and a method for suppressing the foaming of a steviol glycoside solution. In a preferred aspect, the present invention provides a method for producing a steviol glycoside solution with foaming suppressed, and a beverage precursor with foaming suppressed, comprising steviol glycoside and D-allulose.

### Brief Description of Drawings

[Figure 1] Figure 1 is a diagram showing an effect of suppressing foaming caused by rebaudioside M (1,000 ppm).
[Figure 2] Figure 2 is a diagram showing an effect of suppressing foaming caused by rebaudioside M (2,000 ppm).
[Figure 3] Figure 3 is a diagram showing an effect of suppressing foaming caused by rebaudioside M (3,000 ppm).
[Figure 4] Figure 4 is a diagram showing an effect of suppressing foaming caused by rebaudioside M (300 ppm).
[Figure 5] Figure 5 is a diagram showing an effect of suppressing foaming caused by rebaudioside M (50 ppm).
[Figure 6] Figure 6 is a diagram showing an effect of suppressing foaming caused by rebaudioside M (100 ppm).
[Figure 7] Figure 7 is a diagram showing an effect of suppressing foaming caused by rebaudioside M (400 ppm).
[Figure 8] Figure 8 is a diagram showing an effect of suppressing foaming caused by rebaudioside M (600 ppm).
[Figure 9] Figure 9 is a diagram showing an effect of suppressing foaming caused by rebaudioside D (300 ppm).
[Figure 10] Figure 4 is a diagram showing an effect of suppressing foaming caused by Reb.M (150 ppm)/Reb.D (150 ppm) .

### Description of Embodiments

Hereinafter, the present invention will be described in detail. Embodiments given below are illustrations for describing the present invention and do not intend to limit the present invention to the embodiments. The present invention can be carried out in various forms without departing from the spirit of the present invention. All literatures, laid-open publications, patent publications, and other patent literatures cited herein are incorporated herein by reference.

In the present specification, the terms "Reb" and "Reb." mean the same meaning and both mean rebaudioside.

In the present specification, the term "ppm" means "ppm by mass" unless otherwise specified. Since the specific gravity of a beverage is usually 1, the term "ppm by mass" can be equated with "mg/L". In the present specification, the term "room temperature" means "approximately 25°C". In the present specification, the term "approximately " means that an identity exists in the range of ±10% of a numeric value following the term "approximately".

### 1. Method for producing steviol glycoside solution

The present invention relates to a method for producing a steviol glycoside solution. Specifically, the present invention relates to a method for producing a steviol glycoside solution, comprising adding, to a solvent, steviol glycoside and 0.5 to 25 parts by weight of D-allulose per 100 parts by weight of the solvent. The production method according to one aspect of the present invention is a method for producing a steviol glycoside solution with foaming suppressed. In general, the term "D-allulose" is also called "D-psicose". In the present specification, the term "D-allulose" is also simply referred to as "allulose".

In the present specification, the term "foaming" means a state where many air bubbles generated in a steviol glycoside solution come to a liquid level so that bubbles are formed on the liquid level.

In the present specification, the term "with foaming suppressed" means that the amount of bubbles to be formed on the liquid level of a steviol glycoside solution is decreased as compared with a steviol glycoside solution that is not supplemented with D-allulose, and/or bubbles formed on the liquid level of a steviol glycoside solution disappear fast as compared with a steviol glycoside solution that is not supplemented with D-allulose. The term "with foaming suppressed" does not necessarily require that no bubble is formed or formed bubbles completely disappear. In one aspect of the present invention, the term "with foaming suppressed" means that the height of bubbles to be formed on the liquid level of a steviol glycoside solution is smaller as compared with a steviol glycoside solution that is not supplemented with D-allulose, and/or the height of bubbles formed on the liquid level of a steviol glycoside solution is smaller as compared with a steviol glycoside solution that is not supplemented with D-allulose, when the foaming of the steviol glycoside solutions is observed by the following method.
(1) Steviol glycoside and/or D-allulose is added at a predetermined concentration based on a weight to water to prepare an aqueous solution.
(2) 50 mL of the prepared aqueous solution and a rotor are placed in a 1000 mL measuring cylinder, and the height of the liquid level is read and recorded.
(3) Bubbles are generated by stirring at 1300 rpm for 5 minutes with a stirrer, and the stirring is terminated 5 minutes later.
(4) The point in time when the rotor stops is defined as the starting time of measurement, and the calibration of the highest portion of the bubbles formed in the measuring cylinder is read and recorded.
(5) Then, the height of the bubbles is read and recorded by the same method as in the step (4) every 5 seconds, and the height of the bubbles is measured until the measurement time reaches 1 to 5 minutes.

In the present specification, the term "steviol glycoside solution" means a solution containing stevia extracts and/or steviol glycoside. The stevia extracts are obtained, for example, by extracting dry leaves of a stevia plant using a solvent. The method for obtaining the steviol glycoside is not particularly limited, and the steviol glycoside is obtained, for example, by subjecting the stevia extracts to a separation step, a purification step, or the like. The steviol glycoside is also obtained by bioconverting the purified stevia extracts with an enzyme catalyst. Such stevia extracts or steviol glycoside obtained by the method may be used as the steviol glycoside solution, or a known preparation containing the stevia extracts or the steviol glycoside may be purchased and used.

Examples of the steviol glycoside include rebaudioside A, rebaudioside B, rebaudioside C, rebaudioside D, rebaudioside E, rebaudioside F, rebaudioside G, rebaudioside I, rebaudioside J, rebaudioside K, rebaudioside M, rebaudioside N, rebaudioside O, rebaudioside Q, rebaudioside R, dulcoside A, dulcoside C, rubusoside, steviol, steviol monoside, steviol bioside, and stevioside. In some aspects, the steviol glycoside may comprise one or more selected from the group consisting of rebaudioside A, rebaudioside D, and rebaudioside M. In some other aspects, the steviol glycoside may comprise rebaudioside A, rebaudioside D, and rebaudioside M. In some other aspects, the steviol glycoside may comprise rebaudioside D and rebaudioside M. In further some other aspects, the steviol glycoside may comprise rebaudioside M.

In one aspect of the present invention, the content of the steviol glycoside in the steviol glycoside solution may be, for example, 100 to 5000 ppm, 150 to 5000 ppm, 200 to 5000 ppm, 250 to 5000 ppm, 300 to 5000 ppm, 350 to 5000 ppm, 400 to 5000 ppm, 450 to 5000 ppm, 500 to 5000 ppm, 550 to 5000 ppm, 600 to 5000 ppm, 650 to 5000 ppm, 700 to 5000 ppm, 750 to 5000 ppm, 800 to 5000 ppm, 850 to 5000 ppm, 900 to 5000 ppm, 950 to 5000 ppm, 1000 to 5000 ppm, 1500 to 5000 ppm, 2000 to 5000 ppm, 2500 to 5000 ppm, 3000 to 5000 ppm, 100 to 4500 ppm, 150 to 4500 ppm, 200 to 4500 ppm, 250 to 4500 ppm, 300 to 4500 ppm, 350 to 4500 ppm, 400 to 4500 ppm, 450 to 4500 ppm, 500 to 4500 ppm, 550 to 4500 ppm, 600 to 4500 ppm, 650 to 4500 ppm, 700 to 4500 ppm, 750 to 4500 ppm, 800 to 4500 ppm, 850 to 4500 ppm, 900 to 4500 ppm, 950 to 4500 ppm, 1000 to 4500 ppm, 1500 to 4500 ppm, 2000 to 4500 ppm, 2500 to 4500 ppm, 3000 to 4500 ppm, 100 to 4000 ppm, 150 to 4000 ppm, 200 to 4000 ppm, 250 to 4000 ppm, 300 to 4000 ppm, 350 to 4000 ppm, 400 to 4000 ppm, 450 to 4000 ppm, 500 to 4000 ppm, 550 to 4000 ppm, 600 to 4000 ppm, 650 to 4000 ppm, 700 to 4000 ppm, 750 to 4000 ppm, 800 to 4000 ppm, 850 to 4000 ppm, 900 to 4000 ppm, 950 to 4000 ppm, 1000 to 4000 ppm, 1500 to 4000 ppm, 2000 to 4000 ppm, 2500 to 4000 ppm, 3000 to 4000 ppm, 100 to 3500 ppm, 150 to 3500 ppm, 200 to 3500 ppm, 250 to 3500 ppm, 300 to 3500 ppm, 350 to 3500 ppm, 400 to 3500 ppm, 450 to 3500 ppm, 500 to 3500 ppm, 550 to 3500 ppm, 600 to 3500 ppm, 650 to 3500 ppm, 700 to 3500 ppm, 750 to 3500 ppm, 800 to 3500 ppm, 850 to 3500 ppm, 900 to 3500 ppm, 950 to 3500 ppm, 1000 to 3500 ppm, 1500 to 3500 ppm, 2000 to 3500 ppm, 2500 to 3500 ppm, 3000 to 3500 ppm, 100 to 3000 ppm, 150 to 3000 ppm, 200 to 3000 ppm, 250 to 3000 ppm, 300 to 3000 ppm, 350 to 3000 ppm, 400 to 3000 ppm, 450 to 3000 ppm, 500 to 3000 ppm, 550 to 3000 ppm, 600 to 3000 ppm, 650 to 3000 ppm, 700 to 3000 ppm, 750 to 3000 ppm, 800 to 3000 ppm, 850 to 3000 ppm, 900 to 3000 ppm, 950 to 3000 ppm, 1000 to 3000 ppm, 1500 to 3000 ppm, 2000 to 3000 ppm, or 2500 to 3000 ppm. The content of the steviol glycoside in the steviol glycoside solution may be calculated from the amount of a starting material added or may be measured by use of a known analysis method such as liquid chromatography.

In some aspects, the content of the rebaudioside M in the steviol glycoside solution may be, for example, 100 to 5000 ppm, 150 to 5000 ppm, 200 to 5000 ppm, 250 to 5000 ppm, 300 to 5000 ppm, 350 to 5000 ppm, 400 to 5000 ppm, 450 to 5000 ppm, 500 to 5000 ppm, 550 to 5000 ppm, 600 to 5000 ppm, 650 to 5000 ppm, 700 to 5000 ppm, 750 to 5000 ppm, 800 to 5000 ppm, 850 to 5000 ppm, 900 to 5000 ppm, 950 to 5000 ppm, 1000 to 5000 ppm, 1500 to 5000 ppm, 2000 to 5000 ppm, 2500 to 5000 ppm, 3000 to 5000 ppm, 100 to 4500 ppm, 150 to 4500 ppm, 200 to 4500 ppm, 250 to 4500 ppm, 300 to 4500 ppm, 350 to 4500 ppm, 400 to 4500 ppm, 450 to 4500 ppm, 500 to 4500 ppm, 550 to 4500 ppm, 600 to 4500 ppm, 650 to 4500 ppm, 700 to 4500 ppm, 750 to 4500 ppm, 800 to 4500 ppm, 850 to 4500 ppm, 900 to 4500 ppm, 950 to 4500 ppm, 1000 to 4500 ppm, 1500 to 4500 ppm, 2000 to 4500 ppm, 2500 to 4500 ppm, 3000 to 4500 ppm, 100 to 4000 ppm, 150 to 4000 ppm, 200 to 4000 ppm, 250 to 4000 ppm, 300 to 4000 ppm, 350 to 4000 ppm, 400 to 4000 ppm, 450 to 4000 ppm, 500 to 4000 ppm, 550 to 4000 ppm, 600 to 4000 ppm, 650 to 4000 ppm, 700 to 4000 ppm, 750 to 4000 ppm, 800 to 4000 ppm, 850 to 4000 ppm, 900 to 4000 ppm, 950 to 4000 ppm, 1000 to 4000 ppm, 1500 to 4000 ppm, 2000 to 4000 ppm, 2500 to 4000 ppm, 3000 to 4000 ppm, 100 to 3500 ppm, 150 to 3500 ppm, 200 to 3500 ppm, 250 to 3500 ppm, 300 to 3500 ppm, 350 to 3500 ppm, 400 to 3500 ppm, 450 to 3500 ppm, 500 to 3500 ppm, 550 to 3500 ppm, 600 to 3500 ppm, 650 to 3500 ppm, 700 to 3500 ppm, 750 to 3500 ppm, 800 to 3500 ppm, 850 to 3500 ppm, 900 to 3500 ppm, 950 to 3500 ppm, 1000 to 3500 ppm, 1500 to 3500 ppm, 2000 to 3500 ppm, 2500 to 3500 ppm, 3000 to 3500 ppm, 100 to 3000 ppm, 150 to 3000 ppm, 200 to 3000 ppm, 250 to 3000 ppm, 300 to 3000 ppm, 350 to 3000 ppm, 400 to 3000 ppm, 450 to 3000 ppm, 500 to 3000 ppm, 550 to 3000 ppm, 600 to 3000 ppm, 650 to 3000 ppm, 700 to 3000 ppm, 750 to 3000 ppm, 800 to 3000 ppm, 850 to 3000 ppm, 900 to 3000 ppm, 950 to 3000 ppm, 1000 to 3000 ppm, 1500 to 3000 ppm, 2000 to 3000 ppm, or 2500 to 3000 ppm. The content of the rebaudioside M in the steviol glycoside solution may be calculated from the amount of a starting material added or may be measured by use of a known analysis method such as liquid chromatography.

In some aspects, the content of the rebaudioside D in the steviol glycoside solution may be, for example, 100 to 5000 ppm, 150 to 5000 ppm, 200 to 5000 ppm, 250 to 5000 ppm, 300 to 5000 ppm, 350 to 5000 ppm, 400 to 5000 ppm, 450 to 5000 ppm, 500 to 5000 ppm, 550 to 5000 ppm, 600 to 5000 ppm, 650 to 5000 ppm, 700 to 5000 ppm, 750 to 5000 ppm, 800 to 5000 ppm, 850 to 5000 ppm, 900 to 5000 ppm, 950 to 5000 ppm, 1000 to 5000 ppm, 1500 to 5000 ppm, 2000 to 5000 ppm, 2500 to 5000 ppm, 3000 to 5000 ppm, 100 to 4500 ppm, 150 to 4500 ppm, 200 to 4500 ppm, 250 to 4500 ppm, 300 to 4500 ppm, 350 to 4500 ppm, 400 to 4500 ppm, 450 to 4500 ppm, 500 to 4500 ppm, 550 to 4500 ppm, 600 to 4500 ppm, 650 to 4500 ppm, 700 to 4500 ppm, 750 to 4500 ppm, 800 to 4500 ppm, 850 to 4500 ppm, 900 to 4500 ppm, 950 to 4500 ppm, 1000 to 4500 ppm, 1500 to 4500 ppm, 2000 to 4500 ppm, 2500 to 4500 ppm, 3000 to 4500 ppm, 100 to 4000 ppm, 150 to 4000 ppm, 200 to 4000 ppm, 250 to 4000 ppm, 300 to 4000 ppm, 350 to 4000 ppm, 400 to 4000 ppm, 450 to 4000 ppm, 500 to 4000 ppm, 550 to 4000 ppm, 600 to 4000 ppm, 650 to 4000 ppm, 700 to 4000 ppm, 750 to 4000 ppm, 800 to 4000 ppm, 850 to 4000 ppm, 900 to 4000 ppm, 950 to 4000 ppm, 1000 to 4000 ppm, 1500 to 4000 ppm, 2000 to 4000 ppm, 2500 to 4000 ppm, 3000 to 4000 ppm, 100 to 3500 ppm, 150 to 3500 ppm, 200 to 3500 ppm, 250 to 3500 ppm, 300 to 3500 ppm, 350 to 3500 ppm, 400 to 3500 ppm, 450 to 3500 ppm, 500 to 3500 ppm, 550 to 3500 ppm, 600 to 3500 ppm, 650 to 3500 ppm, 700 to 3500 ppm, 750 to 3500 ppm, 800 to 3500 ppm, 850 to 3500 ppm, 900 to 3500 ppm, 950 to 3500 ppm, 1000 to 3500 ppm, 1500 to 3500 ppm, 2000 to 3500 ppm, 2500 to 3500 ppm, 3000 to 3500 ppm, 100 to 3000 ppm, 150 to 3000 ppm, 200 to 3000 ppm, 250 to 3000 ppm, 300 to 3000 ppm, 350 to 3000 ppm, 400 to 3000 ppm, 450 to 3000 ppm, 500 to 3000 ppm, 550 to 3000 ppm, 600 to 3000 ppm, 650 to 3000 ppm, 700 to 3000 ppm, 750 to 3000 ppm, 800 to 3000 ppm, 850 to 3000 ppm, 900 to 3000 ppm, 950 to 3000 ppm, 1000 to 3000 ppm, 1500 to 3000 ppm, 2000 to 3000 ppm, or 2500 to 3000 ppm. The content of the rebaudioside D in the steviol glycoside solution may be calculated from the amount of a starting material added or may be measured by use of a known analysis method such as liquid chromatography.

In some aspects, the content of the rebaudioside A in the steviol glycoside solution may be, for example, 100 to 5000 ppm, 150 to 5000 ppm, 200 to 5000 ppm, 250 to 5000 ppm, 300 to 5000 ppm, 350 to 5000 ppm, 400 to 5000 ppm, 450 to 5000 ppm, 500 to 5000 ppm, 550 to 5000 ppm, 600 to 5000 ppm, 650 to 5000 ppm, 700 to 5000 ppm, 750 to 5000 ppm, 800 to 5000 ppm, 850 to 5000 ppm, 900 to 5000 ppm, 950 to 5000 ppm, 1000 to 5000 ppm, 1500 to 5000 ppm, 2000 to 5000 ppm, 2500 to 5000 ppm, 3000 to 5000 ppm, 100 to 4500 ppm, 150 to 4500 ppm, 200 to 4500 ppm, 250 to 4500 ppm, 300 to 4500 ppm, 350 to 4500 ppm, 400 to 4500 ppm, 450 to 4500 ppm, 500 to 4500 ppm, 550 to 4500 ppm, 600 to 4500 ppm, 650 to 4500 ppm, 700 to 4500 ppm, 750 to 4500 ppm, 800 to 4500 ppm, 850 to 4500 ppm, 900 to 4500 ppm, 950 to 4500 ppm, 1000 to 4500 ppm, 1500 to 4500 ppm, 2000 to 4500 ppm, 2500 to 4500 ppm, 3000 to 4500 ppm, 100 to 4000 ppm, 150 to 4000 ppm, 200 to 4000 ppm, 250 to 4000 ppm, 300 to 4000 ppm, 350 to 4000 ppm, 400 to 4000 ppm, 450 to 4000 ppm, 500 to 4000 ppm, 550 to 4000 ppm, 600 to 4000 ppm, 650 to 4000 ppm, 700 to 4000 ppm, 750 to 4000 ppm, 800 to 4000 ppm, 850 to 4000 ppm, 900 to 4000 ppm, 950 to 4000 ppm, 1000 to 4000 ppm, 1500 to 4000 ppm, 2000 to 4000 ppm, 2500 to 4000 ppm, 3000 to 4000 ppm, 100 to 3500 ppm, 150 to 3500 ppm, 200 to 3500 ppm, 250 to 3500 ppm, 300 to 3500 ppm, 350 to 3500 ppm, 400 to 3500 ppm, 450 to 3500 ppm, 500 to 3500 ppm, 550 to 3500 ppm, 600 to 3500 ppm, 650 to 3500 ppm, 700 to 3500 ppm, 750 to 3500 ppm, 800 to 3500 ppm, 850 to 3500 ppm, 900 to 3500 ppm, 950 to 3500 ppm, 1000 to 3500 ppm, 1500 to 3500 ppm, 2000 to 3500 ppm, 2500 to 3500 ppm, 3000 to 3500 ppm, 100 to 3000 ppm, 150 to 3000 ppm, 200 to 3000 ppm, 250 to 3000 ppm, 300 to 3000 ppm, 350 to 3000 ppm, 400 to 3000 ppm, 450 to 3000 ppm, 500 to 3000 ppm, 550 to 3000 ppm, 600 to 3000 ppm, 650 to 3000 ppm, 700 to 3000 ppm, 750 to 3000 ppm, 800 to 3000 ppm, 850 to 3000 ppm, 900 to 3000 ppm, 950 to 3000 ppm, 1000 to 3000 ppm, 1500 to 3000 ppm, 2000 to 3000 ppm, or 2500 to 3000 ppm. The content of the rebaudioside A in the steviol glycoside solution may be calculated from the amount of a starting material added or may be measured by use of a known analysis method such as liquid chromatography.

The steviol glycoside may have a high purity, and the purity can be, for example, 80% or more, 85% or more, 90% or more, 91% or more, 92% or more, 93% or more, 94% or more, 95% or more, 96% or more, 97% or more, 98% or more, 99.0% or more, 99.1% or more, 99.2% or more, 99.3% or more, 99.4% or more, 99.5% or more, 99.6% or more, 99.7% or more, 99.8% or more, or 99.9% or more. In some aspects, the steviol glycoside may have a low purity, and the purity may be, for example, 50% or more, 55% or more, 60% or more, 65% or more, 70% or more, or 75% or more.

In some other aspects, the purity of the steviol glycoside may be, for example, 50 to 99.9%, 55 to 99.9%, 60 to 99.9%, 65 to 99.9%, 70 to 99.9%, 75 to 99.9%, 50 to 99.8%, 55 to 99.8%, 60 to 99.8%, 65 to 99.8%, 70 to 99.8%, 75 to 99.8%, 50 to 99.7%, 55 to 99.7%, 60 to 99.7%, 65 to 99.7%, 70 to 99.7%, 75 to 99.7%, 50 to 99.6%, 55 to 99.6%, 60 to 99.6%, 65 to 99.6%, 70 to 99.6%, 75 to 99.6%, 50 to 99.5%, 55 to 99.5%, 60 to 99.5%, 65 to 99.5%, 70 to 99.5%, 75 to 99.5%, 50 to 99.4%, 55 to 99.4%, 60 to 99.4%, 65 to 99.4%, 70 to 99.4%, 75 to 99.4%, 50 to 99.3%, 55 to 99.3%, 60 to 99.3%, 65 to 99.3%, 70 to 99.3%, 75 to 99.3%, 50 to 99.2%, 55 to 99.2%, 60 to 99.2%, 65 to 99.2%, 70 to 99.2%, 75 to 99.2%, 50 to 99.1%, 55 to 99.0%, 60 to 99.0%, 65 to 99.0%, 70 to 99.0%, 75 to 99.0%, 50 to 99.0%, 55 to 99.0%, 60 to 99.0%, 65 to 99.0%, 70 to 99.0%, 75 to 99.0%, 50 to 98%, 55 to 98%, 60 to 98%, 65 to 98%, 70 to 98%, 75 to 98%, 50 to 97%, 55 to 97%, 60 to 97%, 65 to 97%, 70 to 97%, 75 to 97%, 50 to 96%, 55 to 96%, 60 to 96%, 65 to 96%, 70 to 96%, 75 to 96%, 50 to 95%, 55 to 95%, 60 to 95%, 65 to 95%, 70 to 95%, 75 to 95%, 50 to 94%, 55 to 94%, 60 to 94%, 65 to 94%, 70 to 94%, 75 to 94%, 50 to 93%, 55 to 93%, 60 to 93%, 65 to 93%, 70 to 93%, 75 to 93%, 50 to 92%, 55 to 92%, 60 to 92%, 65 to 92%, 70 to 92%, 75 to 92%, 50 to 91%, 55 to 91%, 60 to 91%, 65 to 91%, 70 to 91%, 75 to 91%, 50 to 90%, 55 to 90%, 60 to 90%, 65 to 90%, 70 to 90%, 75 to 90%, 50 to 85%, 55 to 85%, 60 to 85%, 65 to 85%, 70 to 85%, 75 to 85%, 50 to 80%, 55 to 80%, 60 to 80%, 65 to 80%, 70 to 80%, or 75 to 80%.

In one aspect of the present invention, the purity of the rebaudioside M may be, for example, 50 to 99.9%, 55 to 99.9%, 60 to 99.9%, 65 to 99.9%, 70 to 99.9%, 75 to 99.9%, 50 to 99.8%, 55 to 99.8%, 60 to 99.8%, 65 to 99.8%, 70 to 99.8%, 75 to 99.8%, 50 to 99.7%, 55 to 99.7%, 60 to 99.7%, 65 to 99.7%, 70 to 99.7%, 75 to 99.7%, 50 to 99.6%, 55 to 99.6%, 60 to 99.6%, 65 to 99.6%, 70 to 99.6%, 75 to 99.6%, 50 to 99.5%, 55 to 99.5%, 60 to 99.5%, 65 to 99.5%, 70 to 99.5%, 75 to 99.5%, 50 to 99.4%, 55 to 99.4%, 60 to 99.4%, 65 to 99.4%, 70 to 99.4%, 75 to 99.4%, 50 to 99.3%, 55 to 99.3%, 60 to 99.3%, 65 to 99.3%, 70 to 99.3%, 75 to 99.3%, 50 to 99.2%, 55 to 99.2%, 60 to 99.2%, 65 to 99.2%, 70 to 99.2%, 75 to 99.2%, 50 to 99.1%, 55 to 99.0%, 60 to 99.0%, 65 to 99.0%, 70 to 99.0%, 75 to 99.0%, 50 to 99.0%, 55 to 99.0%, 60 to 99.0%, 65 to 99.0%, 70 to 99.0%, 75 to 99.0%, 50 to 98%, 55 to 98%, 60 to 98%, 65 to 98%, 70 to 98%, 75 to 98%, 50 to 97%, 55 to 97%, 60 to 97%, 65 to 97%, 70 to 97%, 75 to 97%, 50 to 96%, 55 to 96%, 60 to 96%, 65 to 96%, 70 to 96%, 75 to 96%, 50 to 95%, 55 to 95%, 60 to 95%, 65 to 95%, 70 to 95%, 75 to 95%, 50 to 94%, 55 to 94%, 60 to 94%, 65 to 94%, 70 to 94%, 75 to 94%, 50 to 93%, 55 to 93%, 60 to 93%, 65 to 93%, 70 to 93%, 75 to 93%, 50 to 92%, 55 to 92%, 60 to 92%, 65 to 92%, 70 to 92%, 75 to 92%, 50 to 91%, 55 to 91%, 60 to 91%, 65 to 91%, 70 to 91%, 75 to 91%, 50 to 90%, 55 to 90%, 60 to 90%, 65 to 90%, 70 to 90%, 75 to 90%, 50 to 85%, 55 to 85%, 60 to 85%, 65 to 85%, 70 to 85%, 75 to 85%, 50 to 80%, 55 to 80%, 60 to 80%, 65 to 80%, 70 to 80%, or 75 to 80%.

In one aspect of the present invention, the purity of the rebaudioside D may be, for example, 50 to 99.9%, 55 to 99.9%, 60 to 99.9%, 65 to 99.9%, 70 to 99.9%, 75 to 99.9%, 50 to 99.8%, 55 to 99.8%, 60 to 99.8%, 65 to 99.8%, 70 to 99.8%, 75 to 99.8%, 50 to 99.7%, 55 to 99.7%, 60 to 99.7%, 65 to 99.7%, 70 to 99.7%, 75 to 99.7%, 50 to 99.6%, 55 to 99.6%, 60 to 99.6%, 65 to 99.6%, 70 to 99.6%, 75 to 99.6%, 50 to 99.5%, 55 to 99.5%, 60 to 99.5%, 65 to 99.5%, 70 to 99.5%, 75 to 99.5%, 50 to 99.4%, 55 to 99.4%, 60 to 99.4%, 65 to 99.4%, 70 to 99.4%, 75 to 99.4%, 50 to 99.3%, 55 to 99.3%, 60 to 99.3%, 65 to 99.3%, 70 to 99.3%, 75 to 99.3%, 50 to 99.2%, 55 to 99.2%, 60 to 99.2%, 65 to 99.2%, 70 to 99.2%, 75 to 99.2%, 50 to 99.1%, 55 to 99.0%, 60 to 99.0%, 65 to 99.0%, 70 to 99.0%, 75 to 99.0%, 50 to 99.0%, 55 to 99.0%, 60 to 99.0%, 65 to 99.0%, 70 to 99.0%, 75 to 99.0%, 50 to 98%, 55 to 98%, 60 to 98%, 65 to 98%, 70 to 98%, 75 to 98%, 50 to 97%, 55 to 97%, 60 to 97%, 65 to 97%, 70 to 97%, 75 to 97%, 50 to 96%, 55 to 96%, 60 to 96%, 65 to 96%, 70 to 96%, 75 to 96%, 50 to 95%, 55 to 95%, 60 to 95%, 65 to 95%, 70 to 95%, 75 to 95%, 50 to 94%, 55 to 94%, 60 to 94%, 65 to 94%, 70 to 94%, 75 to 94%, 50 to 93%, 55 to 93%, 60 to 93%, 65 to 93%, 70 to 93%, 75 to 93%, 50 to 92%, 55 to 92%, 60 to 92%, 65 to 92%, 70 to 92%, 75 to 92%, 50 to 91%, 55 to 91%, 60 to 91%, 65 to 91%, 70 to 91%, 75 to 91%, 50 to 90%, 55 to 90%, 60 to 90%, 65 to 90%, 70 to 90%, 75 to 90%, 50 to 85%, 55 to 85%, 60 to 85%, 65 to 85%, 70 to 85%, 75 to 85%, 50 to 80%, 55 to 80%, 60 to 80%, 65 to 80%, 70 to 80%, or 75 to 80%.

In one aspect of the present invention, the purity of the rebaudioside A may be, for example, 50 to 99.9%, 55 to 99.9%, 60 to 99.9%, 65 to 99.9%, 70 to 99.9%, 75 to 99.9%, 50 to 99.8%, 55 to 99.8%, 60 to 99.8%, 65 to 99.8%, 70 to 99.8%, 75 to 99.8%, 50 to 99.7%, 55 to 99.7%, 60 to 99.7%, 65 to 99.7%, 70 to 99.7%, 75 to 99.7%, 50 to 99.6%, 55 to 99.6%, 60 to 99.6%, 65 to 99.6%, 70 to 99.6%, 75 to 99.6%, 50 to 99.5%, 55 to 99.5%, 60 to 99.5%, 65 to 99.5%, 70 to 99.5%, 75 to 99.5%, 50 to 99.4%, 55 to 99.4%, 60 to 99.4%, 65 to 99.4%, 70 to 99.4%, 75 to 99.4%, 50 to 99.3%, 55 to 99.3%, 60 to 99.3%, 65 to 99.3%, 70 to 99.3%, 75 to 99.3%, 50 to 99.2%, 55 to 99.2%, 60 to 99.2%, 65 to 99.2%, 70 to 99.2%, 75 to 99.2%, 50 to 99.1%, 55 to 99.0%, 60 to 99.0%, 65 to 99.0%, 70 to 99.0%, 75 to 99.0%, 50 to 99.0%, 55 to 99.0%, 60 to 99.0%, 65 to 99.0%, 70 to 99.0%, 75 to 99.0%, 50 to 98%, 55 to 98%, 60 to 98%, 65 to 98%, 70 to 98%, 75 to 98%, 50 to 97%, 55 to 97%, 60 to 97%, 65 to 97%, 70 to 97%, 75 to 97%, 50 to 96%, 55 to 96%, 60 to 96%, 65 to 96%, 70 to 96%, 75 to 96%, 50 to 95%, 55 to 95%, 60 to 95%, 65 to 95%, 70 to 95%, 75 to 95%, 50 to 94%, 55 to 94%, 60 to 94%, 65 to 94%, 70 to 94%, 75 to 94%, 50 to 93%, 55 to 93%, 60 to 93%, 65 to 93%, 70 to 93%, 75 to 93%, 50 to 92%, 55 to 92%, 60 to 92%, 65 to 92%, 70 to 92%, 75 to 92%, 50 to 91%, 55 to 91%, 60 to 91%, 65 to 91%, 70 to 91%, 75 to 91%, 50 to 90%, 55 to 90%, 60 to 90%, 65 to 90%, 70 to 90%, 75 to 90%, 50 to 85%, 55 to 85%, 60 to 85%, 65 to 85%, 70 to 85%, 75 to 85%, 50 to 80%, 55 to 80%, 60 to 80%, 65 to 80%, 70 to 80%, or 75 to 80%.

As mentioned above, the steviol glycoside solution may contain rebaudioside D and rebaudioside M as the steviol glycoside. In the case of containing rebaudioside D and rebaudioside M, the weight ratio therebetween may be, for example, 20:1 to 1:20, 15:1 to 1:15, 10:1 to 1:10, 9:1 to 1:9, 8:1 to 1:8, 7:1 to 1:7, 6:1 to 1:6, 5:1 to 1:5, 4:1 to 1:4, 3:1 to 1:3, 2:1 to 1:2, or 1:1.

In the production method according to one aspect of the present invention, 0.5 to 25 parts by weight of D-allulose are added per 100 parts by weight of the solvent. The amount of the D-allulose added may be, for example, 1.0 to 25 parts by weight, 1.5 to 25 parts by weight, 2.0 to 25 parts by weight, 2.5 to 25 parts by weight, 3.0 to 25 parts by weight, 3.5 to 25 parts by weight, 4.0 to 25 parts by weight, 0.5 to 20 parts by weight, 1.0 to 20 parts by weight, 1.5 to 20 parts by weight, 2.0 to 20 parts by weight, 2.5 to 20 parts by weight, 3.0 to 20 parts by weight, 3.5 to 20 parts by weight, 4.0 to 20 parts by weight, 0.5 to 15 parts by weight, 1.0 to 15 parts by weight, 1.5 to 15 parts by weight, 2.0 to 15 parts by weight, 2.5 to 15 parts by weight, 3.0 to 15 parts by weight, 3.5 to 15 parts by weight, 4.0 to 15 parts by weight, 0.5 to 10 parts by weight, 1.0 to 10 parts by weight, 1.5 to 10 parts by weight, 2.0 to 10 parts by weight, 2.5 to 10 parts by weight, 3.0 to 10 parts by weight, 3.5 to 10 parts by weight, or 4.0 to 10 parts by weight per 100 parts by weight of the solvent. The addition of the D-allulose in the range described above can effectively suppress the foaming of the steviol glycoside solution. The D-allulose used may be obtained by treatment such as extraction from a plant of the genus *Itea* or may be obtained by the enzymatic conversion of D-fructose, or a known preparation containing the D-allulose may be purchased and used.

In some aspects, the D-allulose may be added in combination with an additional sweetener. Examples of such a sweetener include rare sugars. The rare sugar refers to a monosaccharide, the abundance of which is very small in nature, and a derivative thereof. The rare sugar encompasses, for example, naturally occurring aldoses other than D-glucose, D-galactose, D-mannose, D-ribose, D-xylose, and L-arabinose, naturally occurring ketoses other than D-fructose, and naturally occurring sugar alcohols other than D-sorbitol. Non-limiting examples of the rare sugar include ketoses such as D-tagatose, D-sorbose, L-fructose, L-allulose, L-tagatose, and L-sorbose, aldoses such as altrose and D-allose, and sugar alcohols such as xylitol, erythritol, and D-talitol. The D-allulose is also included as a rare sugar. When the D-allulose is added in combination with an additional sweetener (e.g., a rare sugar), the aforementioned amount of the D-allulose added alone can be used as a guideline for the total amount of the sweeteners added to appropriately adjust the respective amounts of the sweeteners added.

In one aspect of the present invention, the weight ratio of D-allulose/steviol glycoside in the steviol glycoside solution may be, for example, 1 to 2500, 1 to 2000, 1 to 1670, 1 to 1330, 1 to 1250, 1 to 1000, 1 to 830, 1 to 800, 1 to 710, 1 to 670, 1 to 630, 1 to 570, 1 to 560, 1 to 500, 1 to 460, 1 to 440, 1 to 420, 1 to 400, 1 to 390, 1 to 360, 1 to 330, 1 to 310, 1 to 300, 1 to 290, 1 to 280, 1 to 270, 1 to 260, 1 to 250, 1 to 240, 1 to 230, 1 to 220, 1 to 210, 1 to 200, 1 to 180, 1 to 170, 1 to 150, 1 to 140, 1 to 130, 1 to 120, 1 to 110, 1 to 100, 1 to 80, 1 to 70, 1 to 50, 1 to 40, 1 to 30, 2 to 2500, 2 to 2000, 2 to 1670, 2 to 1330, 2 to 1250, 2 to 1000, 2 to 830, 2 to 800, 2 to 710, 2 to 670, 2 to 630, 2 to 570, 2 to 560, 2 to 500, 2 to 460, 2 to 440, 2 to 420, 2 to 400, 2 to 390, 2 to 360, 2 to 330, 2 to 310, 2 to 300, 2 to 290, 2 to 280, 2 to 270, 2 to 260, 2 to 250, 2 to 240, 2 to 230, 2 to 220, 2 to 210, 2 to 200, 2 to 180, 2 to 170, 2 to 150, 2 to 140, 2 to 130, 2 to 120, 2 to 110, 2 to 100, 2 to 80, 2 to 70, 2 to 50, 2 to 40, 2 to 30, 4 to 2500, 4 to 2000, 4 to 1670, 4 to 1330, 4 to 1250, 4 to 1000, 4 to 830, 4 to 800, 4 to 710, 4 to 670, 4 to 630, 4 to 570, 4 to 560, 4 to 500, 4 to 460, 4 to 440, 4 to 420, 4 to 400, 4 to 390, 4 to 360, 4 to 330, 4 to 310, 4 to 300, 4 to 290, 4 to 280, 4 to 270, 4 to 260, 4 to 250, 4 to 240, 4 to 230, 4 to 220, 4 to 210, 4 to 200, 4 to 180, 4 to 170, 4 to 150, 4 to 140, 4 to 130, 4 to 120, 4 to 110, 4 to 100, 4 to 80, 4 to 70, 4 to 50, 4 to 40, 4 to 30, 7 to 2500, 7 to 2000, 7 to 1670, 7 to 1330, 7 to 1250, 7 to 1000, 7 to 830, 7 to 800, 7 to 710, 7 to 670, 7 to 630, 7 to 570, 7 to 560, 7 to 500, 7 to 460, 7 to 440, 7 to 420, 7 to 400, 7 to 390, 7 to 360, 7 to 330, 7 to 310, 7 to 300, 7 to 290, 7 to 280, 7 to 270, 7 to 260, 7 to 250, 7 to 240, 7 to 230, 7 to 220, 7 to 210, 7 to 200, 7 to 180, 7 to 170, 7 to 150, 7 to 140, 7 to 130, 7 to 120, 7 to 110, 7 to 100, 7 to 80, 7 to 70, 7 to 50, 7 to 40, 7 to 30, 13 to 2500, 13 to 2000, 13 to 1670, 13 to 1330, 13 to 1250, 13 to 1000, 13 to 830, 13 to 800, 13 to 710, 13 to 670, 13 to 630, 13 to 570, 13 to 560, 13 to 500, 13 to 460, 13 to 440, 13 to 420, 13 to 400, 13 to 390, 13 to 360, 13 to 330, 13 to 310, 13 to 300, 13 to 290, 13 to 280, 13 to 270, 13 to 260, 13 to 250, 13 to 240, 13 to 230, 13 to 220, 13 to 210, 13 to 200, 13 to 180, 13 to 170, 13 to 150, 13 to 140, 13 to 130, 13 to 120, 13 to 110, 13 to 100, 13 to 80, 13 to 70, 13 to 50, 13 to 40, 13 to 30, 20 to 500, 20 to 450, 20 to 400, 20 to 350, 20 to 300, 20 to 270, 20 to 250, 20 to 200, 25 to 500, 25 to 450, 25 to 400, 25 to 350, 25 to 300, 25 to 270, 25 to 250, 25 to 200, 27 to 500, 27 to 450, 27 to 400, 27 to 350, 27 to 300, 27 to 270, 27 to 250, or 27 to 200.

In one aspect of the present invention, examples of the solvent include tap water, ion-exchange water, soft water, distilled water, and pure water as well as degassed water obtained by the degassing treatment of such water.

The production method according to one aspect of the present invention may comprise simultaneously adding steviol glycoside and D-allulose to a solvent and then dissolving them. The term "simultaneously adding" can mean that the steviol glycoside and the D-allulose are added to the solvent at least before the start of the dissolution operation, and does not necessarily require the same timings of addition thereof. Examples of the approach of dissolution include heating and stirring. In the production method according to one aspect of the present invention, heating and stirring are used in combination for dissolution. In some other aspects, the dissolution is performed by stirring.

In some aspects, the steviol glycoside and the D-allulose are simultaneously added while the solvent is stirred. In some other aspects, the steviol glycoside may be added to the solvent and dissolved by stirring, and the D-allulose can then be added, or the steviol glycoside may be added to the solvent, and the D-allulose can be added with stirring. In further some other aspects, the D-allulose may be added to the solvent and dissolved by stirring, and the steviol glycoside can then be added, or the D-allulose may be added to the solvent, and the steviol glycoside can be added with stirring. Thus, the production method according to one aspect of the present invention suppresses foaming resulting from an operation, such as stirring, which induces foaming in a solution containing steviol glycoside. Specifically, the production method according to one aspect of the present invention may comprise inducing the foaming of the steviol glycoside solution.

In some aspects, the production method according to one aspect of the present invention may further comprise adding an antifoaming agent to the steviol glycoside solution. Examples of the antifoaming agent can include silicone oil, glycerin fatty acid ester, and sorbitan fatty acid ester. In this context, the antifoaming agent may not be added, or the amount of the antifoaming agent added can be set to a very small amount, because the addition of the D-allulose is capable of suppressing the foaming of the steviol glycoside solution as mentioned above.

The production method according to one aspect of the present invention may further comprising diluting the steviol glycoside solution containing the steviol glycoside and the D-allulose. Examples of the diluent include tap water, ion-exchange water, soft water, and distilled water as well as degassed water obtained by the degassing treatment of such water. The diluent may contain an alcohol. In this context, the alcohol means ethyl alcohol (ethanol) unless otherwise specified. The dilution ratio may be, for example, 2-fold, 3-fold, 4-fold, 5-fold, 6-fold, 7-fold, 8-fold, 9-fold, 10-fold, 15-fold, 20-fold, 25-fold, or 30-fold.

The steviol glycoside solution according to one aspect of the present invention may be a food or drink product. In some aspects, the food or drink product is a beverage. In some other aspects, the food or drink product may be a concentrated syrup of components contained in the food or drink product (e.g., a beverage). The beverage or the syrup may be heat-sterilized and prepared as a beverage or a syrup packed in a container in a state packed in a container. Examples of the container can include, but are not particularly limited to, PET bottles, aluminum cans, steel cans, paper packages, chilled cups, and bottles. In the case of performing heat sterilization, the type thereof is not particularly limited, and the heat sterilization can be performed by use of a usual approach, for example, UHT sterilization or retort sterilization. The temperature of the heat sterilization step is not particularly limited and is, for example, 65 to 130°C, preferably 85 to 120°C, for 10 to 40 minutes. However, sterilization at an appropriate temperature for several seconds, for example, 5 to 30 seconds, is acceptable as long as a sterilization value equivalent to that obtained under the conditions described above can be obtained.

### 2. Beverage precursor comprising steviol glycoside and D-allulose

The present invention also relates to a beverage precursor comprising steviol glycoside and D-allulose. Specifically, the present invention relates to a beverage precursor comprising steviol glycoside and D-allulose, wherein 100 to 5000 ppm of the steviol glycoside and 0.5 to 25% by weight of the D-allulose are contained based on the total weight of the beverage precursor. The beverage precursor according to one aspect of the present invention is a beverage precursor with foaming suppressed, comprising steviol glycoside and D-allulose.

In the present specification, the term "beverage precursor" means an intermediate product that is prepared in the process of producing a beverage. Specifically, the beverage precursor may be, for example, a solution that is prepared in the step of dissolving various components of a beverage or may be a blend that is prepared in the step of blending the solution with a separately prepared solution. In some aspects, the beverage precursor is in a state where various components such as steviol glycoside are contained at higher concentrations than those of a final product beverage. The beverage precursor corresponds to an undiluted steviol glycoside solution in the production method of the present invention. Thus, a method for producing the beverage precursor is the same as the method described in the section "1. Method for producing steviol glycoside solution".

Examples of the steviol glycoside contained in beverage precursor according to one aspect of the present invention include rebaudioside A, rebaudioside B, rebaudioside C, rebaudioside D, rebaudioside E, rebaudioside F, rebaudioside G, rebaudioside I, rebaudioside J, rebaudioside K, rebaudioside M, rebaudioside N, rebaudioside O, rebaudioside Q, rebaudioside R, dulcoside A, dulcoside C, rubusoside, steviol, steviol monoside, steviol bioside, and stevioside. In some aspects, the steviol glycoside may comprise one or more selected from the group consisting of rebaudioside A, rebaudioside D, and rebaudioside M. In some other aspects, the steviol glycoside may comprise rebaudioside A, rebaudioside D, and rebaudioside M. In some other aspects, the steviol glycoside may comprise rebaudioside D and rebaudioside M. In further some other aspects, the steviol glycoside may comprise rebaudioside M.

In one aspect of the present invention, the content of the steviol glycoside based on the total weight of the beverage precursor may be, for example, 100 to 5000 ppm, 150 to 5000 ppm, 200 to 5000 ppm, 250 to 5000 ppm, 300 to 5000 ppm, 350 to 5000 ppm, 400 to 5000 ppm, 450 to 5000 ppm, 500 to 5000 ppm, 550 to 5000 ppm, 600 to 5000 ppm, 650 to 5000 ppm, 700 to 5000 ppm, 750 to 5000 ppm, 800 to 5000 ppm, 850 to 5000 ppm, 900 to 5000 ppm, 950 to 5000 ppm, 1000 to 5000 ppm, 1500 to 5000 ppm, 2000 to 5000 ppm, 2500 to 5000 ppm, 3000 to 5000 ppm, 100 to 4500 ppm, 150 to 4500 ppm, 200 to 4500 ppm, 250 to 4500 ppm, 300 to 4500 ppm, 350 to 4500 ppm, 400 to 4500 ppm, 450 to 4500 ppm, 500 to 4500 ppm, 550 to 4500 ppm, 600 to 4500 ppm, 650 to 4500 ppm, 700 to 4500 ppm, 750 to 4500 ppm, 800 to 4500 ppm, 850 to 4500 ppm, 900 to 4500 ppm, 950 to 4500 ppm, 1000 to 4500 ppm, 1500 to 4500 ppm, 2000 to 4500 ppm, 2500 to 4500 ppm, 3000 to 4500 ppm, 100 to 4000 ppm, 150 to 4000 ppm, 200 to 4000 ppm, 250 to 4000 ppm, 300 to 4000 ppm, 350 to 4000 ppm, 400 to 4000 ppm, 450 to 4000 ppm, 500 to 4000 ppm, 550 to 4000 ppm, 600 to 4000 ppm, 650 to 4000 ppm, 700 to 4000 ppm, 750 to 4000 ppm, 800 to 4000 ppm, 850 to 4000 ppm, 900 to 4000 ppm, 950 to 4000 ppm, 1000 to 4000 ppm, 1500 to 4000 ppm, 2000 to 4000 ppm, 2500 to 4000 ppm, 3000 to 4000 ppm, 100 to 3500 ppm, 150 to 3500 ppm, 200 to 3500 ppm, 250 to 3500 ppm, 300 to 3500 ppm, 350 to 3500 ppm, 400 to 3500 ppm, 450 to 3500 ppm, 500 to 3500 ppm, 550 to 3500 ppm, 600 to 3500 ppm, 650 to 3500 ppm, 700 to 3500 ppm, 750 to 3500 ppm, 800 to 3500 ppm, 850 to 3500 ppm, 900 to 3500 ppm, 950 to 3500 ppm, 1000 to 3500 ppm, 1500 to 3500 ppm, 2000 to 3500 ppm, 2500 to 3500 ppm, 3000 to 3500 ppm, 100 to 3000 ppm, 150 to 3000 ppm, 200 to 3000 ppm, 250 to 3000 ppm, 300 to 3000 ppm, 350 to 3000 ppm, 400 to 3000 ppm, 450 to 3000 ppm, 500 to 3000 ppm, 550 to 3000 ppm, 600 to 3000 ppm, 650 to 3000 ppm, 700 to 3000 ppm, 750 to 3000 ppm, 800 to 3000 ppm, 850 to 3000 ppm, 900 to 3000 ppm, 950 to 3000 ppm, 1000 to 3000 ppm, 1500 to 3000 ppm, 2000 to 3000 ppm, or 2500 to 3000 ppm. The content of the steviol glycoside in the beverage precursor may be calculated from the amount of a starting material added or may be measured by use of a known analysis method such as liquid chromatography.

In some aspects, the content of the rebaudioside M based on the total weight of the beverage precursor may be, for example, 100 to 5000 ppm, 150 to 5000 ppm, 200 to 5000 ppm, 250 to 5000 ppm, 300 to 5000 ppm, 350 to 5000 ppm, 400 to 5000 ppm, 450 to 5000 ppm, 500 to 5000 ppm, 550 to 5000 ppm, 600 to 5000 ppm, 650 to 5000 ppm, 700 to 5000 ppm, 750 to 5000 ppm, 800 to 5000 ppm, 850 to 5000 ppm, 900 to 5000 ppm, 950 to 5000 ppm, 1000 to 5000 ppm, 1500 to 5000 ppm, 2000 to 5000 ppm, 2500 to 5000 ppm, 3000 to 5000 ppm, 100 to 4500 ppm, 150 to 4500 ppm, 200 to 4500 ppm, 250 to 4500 ppm, 300 to 4500 ppm, 350 to 4500 ppm, 400 to 4500 ppm, 450 to 4500 ppm, 500 to 4500 ppm, 550 to 4500 ppm, 600 to 4500 ppm, 650 to 4500 ppm, 700 to 4500 ppm, 750 to 4500 ppm, 800 to 4500 ppm, 850 to 4500 ppm, 900 to 4500 ppm, 950 to 4500 ppm, 1000 to 4500 ppm, 1500 to 4500 ppm, 2000 to 4500 ppm, 2500 to 4500 ppm, 3000 to 4500 ppm, 100 to 4000 ppm, 150 to 4000 ppm, 200 to 4000 ppm, 250 to 4000 ppm, 300 to 4000 ppm, 350 to 4000 ppm, 400 to 4000 ppm, 450 to 4000 ppm, 500 to 4000 ppm, 550 to 4000 ppm, 600 to 4000 ppm, 650 to 4000 ppm, 700 to 4000 ppm, 750 to 4000 ppm, 800 to 4000 ppm, 850 to 4000 ppm, 900 to 4000 ppm, 950 to 4000 ppm, 1000 to 4000 ppm, 1500 to 4000 ppm, 2000 to 4000 ppm, 2500 to 4000 ppm, 3000 to 4000 ppm, 100 to 3500 ppm, 150 to 3500 ppm, 200 to 3500 ppm, 250 to 3500 ppm, 300 to 3500 ppm, 350 to 3500 ppm, 400 to 3500 ppm, 450 to 3500 ppm, 500 to 3500 ppm, 550 to 3500 ppm, 600 to 3500 ppm, 650 to 3500 ppm, 700 to 3500 ppm, 750 to 3500 ppm, 800 to 3500 ppm, 850 to 3500 ppm, 900 to 3500 ppm, 950 to 3500 ppm, 1000 to 3500 ppm, 1500 to 3500 ppm, 2000 to 3500 ppm, 2500 to 3500 ppm, 3000 to 3500 ppm, 100 to 3000 ppm, 150 to 3000 ppm, 200 to 3000 ppm, 250 to 3000 ppm, 300 to 3000 ppm, 350 to 3000 ppm, 400 to 3000 ppm, 450 to 3000 ppm, 500 to 3000 ppm, 550 to 3000 ppm, 600 to 3000 ppm, 650 to 3000 ppm, 700 to 3000 ppm, 750 to 3000 ppm, 800 to 3000 ppm, 850 to 3000 ppm, 900 to 3000 ppm, 950 to 3000 ppm, 1000 to 3000 ppm, 1500 to 3000 ppm, 2000 to 3000 ppm, or 2500 to 3000 ppm. The content of the rebaudioside M in the beverage precursor may be calculated from the amount of a starting material added or may be measured by use of a known analysis method such as liquid chromatography.

In some aspects, the content of the rebaudioside D based on the total weight of the beverage precursor may be, for example, 100 to 5000 ppm, 150 to 5000 ppm, 200 to 5000 ppm, 250 to 5000 ppm, 300 to 5000 ppm, 350 to 5000 ppm, 400 to 5000 ppm, 450 to 5000 ppm, 500 to 5000 ppm, 550 to 5000 ppm, 600 to 5000 ppm, 650 to 5000 ppm, 700 to 5000 ppm, 750 to 5000 ppm, 800 to 5000 ppm, 850 to 5000 ppm, 900 to 5000 ppm, 950 to 5000 ppm, 1000 to 5000 ppm, 1500 to 5000 ppm, 2000 to 5000 ppm, 2500 to 5000 ppm, 3000 to 5000 ppm, 100 to 4500 ppm, 150 to 4500 ppm, 200 to 4500 ppm, 250 to 4500 ppm, 300 to 4500 ppm, 350 to 4500 ppm, 400 to 4500 ppm, 450 to 4500 ppm, 500 to 4500 ppm, 550 to 4500 ppm, 600 to 4500 ppm, 650 to 4500 ppm, 700 to 4500 ppm, 750 to 4500 ppm, 800 to 4500 ppm, 850 to 4500 ppm, 900 to 4500 ppm, 950 to 4500 ppm, 1000 to 4500 ppm, 1500 to 4500 ppm, 2000 to 4500 ppm, 2500 to 4500 ppm, 3000 to 4500 ppm, 100 to 4000 ppm, 150 to 4000 ppm, 200 to 4000 ppm, 250 to 4000 ppm, 300 to 4000 ppm, 350 to 4000 ppm, 400 to 4000 ppm, 450 to 4000 ppm, 500 to 4000 ppm, 550 to 4000 ppm, 600 to 4000 ppm, 650 to 4000 ppm, 700 to 4000 ppm, 750 to 4000 ppm, 800 to 4000 ppm, 850 to 4000 ppm, 900 to 4000 ppm, 950 to 4000 ppm, 1000 to 4000 ppm, 1500 to 4000 ppm, 2000 to 4000 ppm, 2500 to 4000 ppm, 3000 to 4000 ppm, 100 to 3500 ppm, 150 to 3500 ppm, 200 to 3500 ppm, 250 to 3500 ppm, 300 to 3500 ppm, 350 to 3500 ppm, 400 to 3500 ppm, 450 to 3500 ppm, 500 to 3500 ppm, 550 to 3500 ppm, 600 to 3500 ppm, 650 to 3500 ppm, 700 to 3500 ppm, 750 to 3500 ppm, 800 to 3500 ppm, 850 to 3500 ppm, 900 to 3500 ppm, 950 to 3500 ppm, 1000 to 3500 ppm, 1500 to 3500 ppm, 2000 to 3500 ppm, 2500 to 3500 ppm, 3000 to 3500 ppm, 100 to 3000 ppm, 150 to 3000 ppm, 200 to 3000 ppm, 250 to 3000 ppm, 300 to 3000 ppm, 350 to 3000 ppm, 400 to 3000 ppm, 450 to 3000 ppm, 500 to 3000 ppm, 550 to 3000 ppm, 600 to 3000 ppm, 650 to 3000 ppm, 700 to 3000 ppm, 750 to 3000 ppm, 800 to 3000 ppm, 850 to 3000 ppm, 900 to 3000 ppm, 950 to 3000 ppm, 1000 to 3000 ppm, 1500 to 3000 ppm, 2000 to 3000 ppm, or 2500 to 3000 ppm. The content of the rebaudioside D in the beverage precursor may be calculated from the amount of a starting material added or may be measured by use of a known analysis method such as liquid chromatography.

In some aspects, the content of the rebaudioside A based on the total weight of the beverage precursor may be, for example, 100 to 5000 ppm, 150 to 5000 ppm, 200 to 5000 ppm, 250 to 5000 ppm, 300 to 5000 ppm, 350 to 5000 ppm, 400 to 5000 ppm, 450 to 5000 ppm, 500 to 5000 ppm, 550 to 5000 ppm, 600 to 5000 ppm, 650 to 5000 ppm, 700 to 5000 ppm, 750 to 5000 ppm, 800 to 5000 ppm, 850 to 5000 ppm, 900 to 5000 ppm, 950 to 5000 ppm, 1000 to 5000 ppm, 1500 to 5000 ppm, 2000 to 5000 ppm, 2500 to 5000 ppm, 3000 to 5000 ppm, 100 to 4500 ppm, 150 to 4500 ppm, 200 to 4500 ppm, 250 to 4500 ppm, 300 to 4500 ppm, 350 to 4500 ppm, 400 to 4500 ppm, 450 to 4500 ppm, 500 to 4500 ppm, 550 to 4500 ppm, 600 to 4500 ppm, 650 to 4500 ppm, 700 to 4500 ppm, 750 to 4500 ppm, 800 to 4500 ppm, 850 to 4500 ppm, 900 to 4500 ppm, 950 to 4500 ppm, 1000 to 4500 ppm, 1500 to 4500 ppm, 2000 to 4500 ppm, 2500 to 4500 ppm, 3000 to 4500 ppm, 100 to 4000 ppm, 150 to 4000 ppm, 200 to 4000 ppm, 250 to 4000 ppm, 300 to 4000 ppm, 350 to 4000 ppm, 400 to 4000 ppm, 450 to 4000 ppm, 500 to 4000 ppm, 550 to 4000 ppm, 600 to 4000 ppm, 650 to 4000 ppm, 700 to 4000 ppm, 750 to 4000 ppm, 800 to 4000 ppm, 850 to 4000 ppm, 900 to 4000 ppm, 950 to 4000 ppm, 1000 to 4000 ppm, 1500 to 4000 ppm, 2000 to 4000 ppm, 2500 to 4000 ppm, 3000 to 4000 ppm, 100 to 3500 ppm, 150 to 3500 ppm, 200 to 3500 ppm, 250 to 3500 ppm, 300 to 3500 ppm, 350 to 3500 ppm, 400 to 3500 ppm, 450 to 3500 ppm, 500 to 3500 ppm, 550 to 3500 ppm, 600 to 3500 ppm, 650 to 3500 ppm, 700 to 3500 ppm, 750 to 3500 ppm, 800 to 3500 ppm, 850 to 3500 ppm, 900 to 3500 ppm, 950 to 3500 ppm, 1000 to 3500 ppm, 1500 to 3500 ppm, 2000 to 3500 ppm, 2500 to 3500 ppm, 3000 to 3500 ppm, 100 to 3000 ppm, 150 to 3000 ppm, 200 to 3000 ppm, 250 to 3000 ppm, 300 to 3000 ppm, 350 to 3000 ppm, 400 to 3000 ppm, 450 to 3000 ppm, 500 to 3000 ppm, 550 to 3000 ppm, 600 to 3000 ppm, 650 to 3000 ppm, 700 to 3000 ppm, 750 to 3000 ppm, 800 to 3000 ppm, 850 to 3000 ppm, 900 to 3000 ppm, 950 to 3000 ppm, 1000 to 3000 ppm, 1500 to 3000 ppm, 2000 to 3000 ppm, or 2500 to 3000 ppm. The content of the rebaudioside A in the beverage precursor may be calculated from the amount of a starting material added or may be measured by use of a known analysis method such as liquid chromatography.

The steviol glycoside may have a high purity, and the purity can be, for example, 80% or more, 85% or more, 90% or more, 91% or more, 92% or more, 93% or more, 94% or more, 95% or more, 96% or more, 97% or more, 98% or more, 99.0% or more, 99.1% or more, 99.2% or more, 99.3% or more, 99.4% or more, 99.5% or more, 99.6% or more, 99.7% or more, 99.8% or more, or 99.9% or more. In some aspects, the steviol glycoside may have a low purity, and the purity may be, for example, 50% or more, 55% or more, 60% or more, 65% or more, 70% or more, or 75% or more.

In some other aspects, the purity of the steviol glycoside may be, for example, 50 to 99.9%, 55 to 99.9%, 60 to 99.9%, 65 to 99.9%, 70 to 99.9%, 75 to 99.9%, 50 to 99.8%, 55 to 99.8%, 60 to 99.8%, 65 to 99.8%, 70 to 99.8%, 75 to 99.8%, 50 to 99.7%, 55 to 99.7%, 60 to 99.7%, 65 to 99.7%, 70 to 99.7%, 75 to 99.7%, 50 to 99.6%, 55 to 99.6%, 60 to 99.6%, 65 to 99.6%, 70 to 99.6%, 75 to 99.6%, 50 to 99.5%, 55 to 99.5%, 60 to 99.5%, 65 to 99.5%, 70 to 99.5%, 75 to 99.5%, 50 to 99.4%, 55 to 99.4%, 60 to 99.4%, 65 to 99.4%, 70 to 99.4%, 75 to 99.4%, 50 to 99.3%, 55 to 99.3%, 60 to 99.3%, 65 to 99.3%, 70 to 99.3%, 75 to 99.3%, 50 to 99.2%, 55 to 99.2%, 60 to 99.2%, 65 to 99.2%, 70 to 99.2%, 75 to 99.2%, 50 to 99.1%, 55 to 99.0%, 60 to 99.0%, 65 to 99.0%, 70 to 99.0%, 75 to 99.0%, 50 to 99.0%, 55 to 99.0%, 60 to 99.0%, 65 to 99.0%, 70 to 99.0%, 75 to 99.0%, 50 to 98%, 55 to 98%, 60 to 98%, 65 to 98%, 70 to 98%, 75 to 98%, 50 to 97%, 55 to 97%, 60 to 97%, 65 to 97%, 70 to 97%, 75 to 97%, 50 to 96%, 55 to 96%, 60 to 96%, 65 to 96%, 70 to 96%, 75 to 96%, 50 to 95%, 55 to 95%, 60 to 95%, 65 to 95%, 70 to 95%, 75 to 95%, 50 to 94%, 55 to 94%, 60 to 94%, 65 to 94%, 70 to 94%, 75 to 94%, 50 to 93%, 55 to 93%, 60 to 93%, 65 to 93%, 70 to 93%, 75 to 93%, 50 to 92%, 55 to 92%, 60 to 92%, 65 to 92%, 70 to 92%, 75 to 92%, 50 to 91%, 55 to 91%, 60 to 91%, 65 to 91%, 70 to 91%, 75 to 91%, 50 to 90%, 55 to 90%, 60 to 90%, 65 to 90%, 70 to 90%, 75 to 90%, 50 to 85%, 55 to 85%, 60 to 85%, 65 to 85%, 70 to 85%, 75 to 85%, 50 to 80%, 55 to 80%, 60 to 80%, 65 to 80%, 70 to 80%, or 75 to 80%.

In one aspect of the present invention, the purity of the rebaudioside M may be, for example, 50 to 99.9%, 55 to 99.9%, 60 to 99.9%, 65 to 99.9%, 70 to 99.9%, 75 to 99.9%, 50 to 99.8%, 55 to 99.8%, 60 to 99.8%, 65 to 99.8%, 70 to 99.8%, 75 to 99.8%, 50 to 99.7%, 55 to 99.7%, 60 to 99.7%, 65 to 99.7%, 70 to 99.7%, 75 to 99.7%, 50 to 99.6%, 55 to 99.6%, 60 to 99.6%, 65 to 99.6%, 70 to 99.6%, 75 to 99.6%, 50 to 99.5%, 55 to 99.5%, 60 to 99.5%, 65 to 99.5%, 70 to 99.5%, 75 to 99.5%, 50 to 99.4%, 55 to 99.4%, 60 to 99.4%, 65 to 99.4%, 70 to 99.4%, 75 to 99.4%, 50 to 99.3%, 55 to 99.3%, 60 to 99.3%, 65 to 99.3%, 70 to 99.3%, 75 to 99.3%, 50 to 99.2%, 55 to 99.2%, 60 to 99.2%, 65 to 99.2%, 70 to 99.2%, 75 to 99.2%, 50 to 99.1%, 55 to 99.0%, 60 to 99.0%, 65 to 99.0%, 70 to 99.0%, 75 to 99.0%, 50 to 99.0%, 55 to 99.0%, 60 to 99.0%, 65 to 99.0%, 70 to 99.0%, 75 to 99.0%, 50 to 98%, 55 to 98%, 60 to 98%, 65 to 98%, 70 to 98%, 75 to 98%, 50 to 97%, 55 to 97%, 60 to 97%, 65 to 97%, 70 to 97%, 75 to 97%, 50 to 96%, 55 to 96%, 60 to 96%, 65 to 96%, 70 to 96%, 75 to 96%, 50 to 95%, 55 to 95%, 60 to 95%, 65 to 95%, 70 to 95%, 75 to 95%, 50 to 94%, 55 to 94%, 60 to 94%, 65 to 94%, 70 to 94%, 75 to 94%, 50 to 93%, 55 to 93%, 60 to 93%, 65 to 93%, 70 to 93%, 75 to 93%, 50 to 92%, 55 to 92%, 60 to 92%, 65 to 92%, 70 to 92%, 75 to 92%, 50 to 91%, 55 to 91%, 60 to 91%, 65 to 91%, 70 to 91%, 75 to 91%, 50 to 90%, 55 to 90%, 60 to 90%, 65 to 90%, 70 to 90%, 75 to 90%, 50 to 85%, 55 to 85%, 60 to 85%, 65 to 85%, 70 to 85%, 75 to 85%, 50 to 80%, 55 to 80%, 60 to 80%, 65 to 80%, 70 to 80%, or 75 to 80%.

In one aspect of the present invention, the purity of the rebaudioside D may be, for example, 50 to 99.9%, 55 to 99.9%, 60 to 99.9%, 65 to 99.9%, 70 to 99.9%, 75 to 99.9%, 50 to 99.8%, 55 to 99.8%, 60 to 99.8%, 65 to 99.8%, 70 to 99.8%, 75 to 99.8%, 50 to 99.7%, 55 to 99.7%, 60 to 99.7%, 65 to 99.7%, 70 to 99.7%, 75 to 99.7%, 50 to 99.6%, 55 to 99.6%, 60 to 99.6%, 65 to 99.6%, 70 to 99.6%, 75 to 99.6%, 50 to 99.5%, 55 to 99.5%, 60 to 99.5%, 65 to 99.5%, 70 to 99.5%, 75 to 99.5%, 50 to 99.4%, 55 to 99.4%, 60 to 99.4%, 65 to 99.4%, 70 to 99.4%, 75 to 99.4%, 50 to 99.3%, 55 to 99.3%, 60 to 99.3%, 65 to 99.3%, 70 to 99.3%, 75 to 99.3%, 50 to 99.2%, 55 to 99.2%, 60 to 99.2%, 65 to 99.2%, 70 to 99.2%, 75 to 99.2%, 50 to 99.1%, 55 to 99.0%, 60 to 99.0%, 65 to 99.0%, 70 to 99.0%, 75 to 99.0%, 50 to 99.0%, 55 to 99.0%, 60 to 99.0%, 65 to 99.0%, 70 to 99.0%, 75 to 99.0%, 50 to 98%, 55 to 98%, 60 to 98%, 65 to 98%, 70 to 98%, 75 to 98%, 50 to 97%, 55 to 97%, 60 to 97%, 65 to 97%, 70 to 97%, 75 to 97%, 50 to 96%, 55 to 96%, 60 to 96%, 65 to 96%, 70 to 96%, 75 to 96%, 50 to 95%, 55 to 95%, 60 to 95%, 65 to 95%, 70 to 95%, 75 to 95%, 50 to 94%, 55 to 94%, 60 to 94%, 65 to 94%, 70 to 94%, 75 to 94%, 50 to 93%, 55 to 93%, 60 to 93%, 65 to 93%, 70 to 93%, 75 to 93%, 50 to 92%, 55 to 92%, 60 to 92%, 65 to 92%, 70 to 92%, 75 to 92%, 50 to 91%, 55 to 91%, 60 to 91%, 65 to 91%, 70 to 91%, 75 to 91%, 50 to 90%, 55 to 90%, 60 to 90%, 65 to 90%, 70 to 90%, 75 to 90%, 50 to 85%, 55 to 85%, 60 to 85%, 65 to 85%, 70 to 85%, 75 to 85%, 50 to 80%, 55 to 80%, 60 to 80%, 65 to 80%, 70 to 80%, or 75 to 80%.

In one aspect of the present invention, the purity of the rebaudioside A may be, for example, 50 to 99.9%, 55 to 99.9%, 60 to 99.9%, 65 to 99.9%, 70 to 99.9%, 75 to 99.9%, 50 to 99.8%, 55 to 99.8%, 60 to 99.8%, 65 to 99.8%, 70 to 99.8%, 75 to 99.8%, 50 to 99.7%, 55 to 99.7%, 60 to 99.7%, 65 to 99.7%, 70 to 99.7%, 75 to 99.7%, 50 to 99.6%, 55 to 99.6%, 60 to 99.6%, 65 to 99.6%, 70 to 99.6%, 75 to 99.6%, 50 to 99.5%, 55 to 99.5%, 60 to 99.5%, 65 to 99.5%, 70 to 99.5%, 75 to 99.5%, 50 to 99.4%, 55 to 99.4%, 60 to 99.4%, 65 to 99.4%, 70 to 99.4%, 75 to 99.4%, 50 to 99.3%, 55 to 99.3%, 60 to 99.3%, 65 to 99.3%, 70 to 99.3%, 75 to 99.3%, 50 to 99.2%, 55 to 99.2%, 60 to 99.2%, 65 to 99.2%, 70 to 99.2%, 75 to 99.2%, 50 to 99.1%, 55 to 99.0%, 60 to 99.0%, 65 to 99.0%, 70 to 99.0%, 75 to 99.0%, 50 to 99.0%, 55 to 99.0%, 60 to 99.0%, 65 to 99.0%, 70 to 99.0%, 75 to 99.0%, 50 to 98%, 55 to 98%, 60 to 98%, 65 to 98%, 70 to 98%, 75 to 98%, 50 to 97%, 55 to 97%, 60 to 97%, 65 to 97%, 70 to 97%, 75 to 97%, 50 to 96%, 55 to 96%, 60 to 96%, 65 to 96%, 70 to 96%, 75 to 96%, 50 to 95%, 55 to 95%, 60 to 95%, 65 to 95%, 70 to 95%, 75 to 95%, 50 to 94%, 55 to 94%, 60 to 94%, 65 to 94%, 70 to 94%, 75 to 94%, 50 to 93%, 55 to 93%, 60 to 93%, 65 to 93%, 70 to 93%, 75 to 93%, 50 to 92%, 55 to 92%, 60 to 92%, 65 to 92%, 70 to 92%, 75 to 92%, 50 to 91%, 55 to 91%, 60 to 91%, 65 to 91%, 70 to 91%, 75 to 91%, 50 to 90%, 55 to 90%, 60 to 90%, 65 to 90%, 70 to 90%, 75 to 90%, 50 to 85%, 55 to 85%, 60 to 85%, 65 to 85%, 70 to 85%, 75 to 85%, 50 to 80%, 55 to 80%, 60 to 80%, 65 to 80%, 70 to 80%, or 75 to 80%.

As mentioned above, the beverage precursor may contain rebaudioside D and rebaudioside M as the steviol glycoside. In the case of containing rebaudioside D and rebaudioside M, the weight ratio therebetween may be, for example, 20:1 to 1:20, 15:1 to 1:15, 10:1 to 1:10, 9:1 to 1:9, 8:1 to 1:8, 7:1 to 1:7, 6:1 to 1:6, 5:1 to 1:5, 4:1 to 1:4, 3:1 to 1:3, 2:1 to 1:2, or 1:1.

In one aspect of the present invention, the content of the D-allulose based on the total weight of the beverage precursor may be, for example, 0.5 to 25% by weight, 1.0 to 25% by weight, 1.5 to 25% by weight, 2.0 to 25% by weight, 2.5 to 25% by weight, 3.0 to 25% by weight, 3.5 to 25% by weight, 4.0 to 25% by weight, 0.5 to 20% by weight, 1.0 to 20% by weight, 1.5 to 20% by weight, 2.0 to 20% by weight, 2.5 to 20% by weight, 3.0 to 20% by weight, 3.5 to 20% by weight, 4.0 to 20% by weight, 0.5 to 15% by weight, 1.0 to 15% by weight, 1.5 to 15% by weight, 2.0 to 15% by weight, 2.5 to 15% by weight, 3.0 to 15% by weight, 3.5 to 15% by weight, 4.0 to 15% by weight, 0.5 to 10% by weight, 1.0 to 10% by weight, 1.5 to 10% by weight, 2.0 to 10% by weight, 2.5 to 10% by weight, 3.0 to 10% by weight, 3.5 to 10% by weight, or 4.0 to 10% by weight. The beverage precursor containing the D-allulose in the range described above can be a beverage with foaming effectively suppressed. The D-allulose used may be obtained by treatment such as extraction from a plant of the genus *Itea* or may be obtained by the enzymatic conversion of D-fructose, or a known preparation containing the D-allulose may be purchased and used.

In some aspects, the beverage precursor may comprise the D-allulose in combination with an additional sweetener. Examples of such a sweetener include rare sugars. The rare sugar refers to a monosaccharide, the abundance of which is very small in nature, and a derivative thereof. The rare sugar encompasses, for example, naturally occurring aldoses other than D-glucose, D-galactose, D-mannose, D-ribose, D-xylose, and L-arabinose, naturally occurring ketoses other than D-fructose, and naturally occurring sugar alcohols other than D-sorbitol. Non-limiting examples of the rare sugar include ketoses such as D-tagatose, D-sorbose, L-fructose, L-allulose, L-tagatose, and L-sorbose, aldoses such as altrose and D-allose, and sugar alcohols such as xylitol, erythritol, and D-talitol. The D-allulose is also included as a rare sugar. When the D-allulose is used in combination with an additional sweetener (e.g., a rare sugar), the aforementioned content of the D-allulose alone can be used as a guideline for the total content of the sweeteners to appropriately adjust the respective contents of the sweeteners.

In one aspect of the present invention, the weight ratio of D-allulose/steviol glycoside in the beverage precursor may be, for example, 1 to 2500, 1 to 2000, 1 to 1670, 1 to 1330, 1 to 1250, 1 to 1000, 1 to 830, 1 to 800, 1 to 710, 1 to 670, 1 to 630, 1 to 570, 1 to 560, 1 to 500, 1 to 460, 1 to 440, 1 to 420, 1 to 400, 1 to 390, 1 to 360, 1 to 330, 1 to 310, 1 to 300, 1 to 290, 1 to 280, 1 to 270, 1 to 260, 1 to 250, 1 to 240, 1 to 230, 1 to 220, 1 to 210, 1 to 200, 1 to 180, 1 to 170, 1 to 150, 1 to 140, 1 to 130, 1 to 120, 1 to 110, 1 to 100, 1 to 80, 1 to 70, 1 to 50, 1 to 40, 1 to 30, 2 to 2500, 2 to 2000, 2 to 1670, 2 to 1330, 2 to 1250, 2 to 1000, 2 to 830, 2 to 800, 2 to 710, 2 to 670, 2 to 630, 2 to 570, 2 to 560, 2 to 500, 2 to 460, 2 to 440, 2 to 420, 2 to 400, 2 to 390, 2 to 360, 2 to 330, 2 to 310, 2 to 300, 2 to 290, 2 to 280, 2 to 270, 2 to 260, 2 to 250, 2 to 240, 2 to 230, 2 to 220, 2 to 210, 2 to 200, 2 to 180, 2 to 170, 2 to 150, 2 to 140, 2 to 130, 2 to 120, 2 to 110, 2 to 100, 2 to 80, 2 to 70, 2 to 50, 2 to 40, 2 to 30, 4 to 2500, 4 to 2000, 4 to 1670, 4 to 1330, 4 to 1250, 4 to 1000, 4 to 830, 4 to 800, 4 to 710, 4 to 670, 4 to 630, 4 to 570, 4 to 560, 4 to 500, 4 to 460, 4 to 440, 4 to 420, 4 to 400, 4 to 390, 4 to 360, 4 to 330, 4 to 310, 4 to 300, 4 to 290, 4 to 280, 4 to 270, 4 to 260, 4 to 250, 4 to 240, 4 to 230, 4 to 220, 4 to 210, 4 to 200, 4 to 180, 4 to 170, 4 to 150, 4 to 140, 4 to 130, 4 to 120, 4 to 110, 4 to 100, 4 to 80, 4 to 70, 4 to 50, 4 to 40, 4 to 30, 7 to 2500, 7 to 2000, 7 to 1670, 7 to 1330, 7 to 1250, 7 to 1000, 7 to 830, 7 to 800, 7 to 710, 7 to 670, 7 to 630, 7 to 570, 7 to 560, 7 to 500, 7 to 460, 7 to 440, 7 to 420, 7 to 400, 7 to 390, 7 to 360, 7 to 330, 7 to 310, 7 to 300, 7 to 290, 7 to 280, 7 to 270, 7 to 260, 7 to 250, 7 to 240, 7 to 230, 7 to 220, 7 to 210, 7 to 200, 7 to 180, 7 to 170, 7 to 150, 7 to 140, 7 to 130, 7 to 120, 7 to 110, 7 to 100, 7 to 80, 7 to 70, 7 to 50, 7 to 40, 7 to 30, 13 to 2500, 13 to 2000, 13 to 1670, 13 to 1330, 13 to 1250, 13 to 1000, 13 to 830, 13 to 800, 13 to 710, 13 to 670, 13 to 630, 13 to 570, 13 to 560, 13 to 500, 13 to 460, 13 to 440, 13 to 420, 13 to 400, 13 to 390, 13 to 360, 13 to 330, 13 to 310, 13 to 300, 13 to 290, 13 to 280, 13 to 270, 13 to 260, 13 to 250, 13 to 240, 13 to 230, 13 to 220, 13 to 210, 13 to 200, 13 to 180, 13 to 170, 13 to 150, 13 to 140, 13 to 130, 13 to 120, 13 to 110, 13 to 100, 13 to 80, 13 to 70, 13 to 50, 13 to 40, 13 to 30, 20 to 500, 20 to 450, 20 to 400, 20 to 350, 20 to 300, 20 to 270, 20 to 250, 20 to 200, 25 to 500, 25 to 450, 25 to 400, 25 to 350, 25 to 300, 25 to 270, 25 to 250, 25 to 200, 27 to 500, 27 to 450, 27 to 400, 27 to 350, 27 to 300, 27 to 270, 27 to 250, or 27 to 200.

In one aspect of the present invention, examples of the solvent for the beverage precursor include tap water, ion-exchange water, soft water, distilled water, and pure water as well as degassed water obtained by the degassing treatment of such water.

### 3. Beverage

The present invention also relates to a beverage comprising the beverage precursor and a diluent. The beverage precursor is as described in the section "2. Beverage precursor comprising steviol glycoside and D-allulose". The diluent and the dilution ratio are as described in the section "1. Method for producing steviol glycoside solution".

Examples of the beverage include carbonated beverages, isotonic drinks, flavored water, fruit juice beverages, alcoholic beverages, nonalcoholic beverages, beer taste beverages such as beer and nonalcoholic beer, coffee beverages, tea beverages, cocoa beverages, nutritional beverages, and functional beverages. Examples of the carbonated beverage include sparkling beverages, cola, diet cola, ginger ale, cider, fruit juice flavor carbonated beverages, and carbonated water provided with fruit juice flavor.

The content of the steviol glycoside in the beverage is preferably 1 to 800 ppm and may be, for example, 20 to 750 ppm, 20 to 700 ppm, 20 to 650 ppm, 20 to 600 ppm, 20 to 550 ppm, 25 to 550 ppm, 30 to 550 ppm, 35 to 550 ppm, 40 to 550 ppm, 45 to 550 ppm, 50 to 550 ppm, 55 to 550 ppm, 20 to 540 ppm, 25 to 540 ppm, 30 to 540 ppm, 35 to 540 ppm, 40 to 540 ppm, 45 to 540 ppm, 50 to 540 ppm, 55 to 540 ppm, 20 to 530 ppm, 25 to 530 ppm, 30 to 530 ppm, 35 to 530 ppm, 40 to 530 ppm, 45 to 530 ppm, 50 to 530 ppm, 55 to 530 ppm, 20 to 520 ppm, 25 to 520 ppm, 30 to 520 ppm, 35 to 520 ppm, 40 to 520 ppm, 45 to 520 ppm, 50 to 520 ppm, 55 to 520 ppm, 20 to 510 ppm, 25 to 510 ppm, 30 to 510 ppm, 35 to 510 ppm, 40 to 510 ppm, 45 to 510 ppm, 50 to 510 ppm, 55 to 510 ppm, 20 to 505 ppm, 25 to 505 ppm, 30 to 505 ppm, 35 to 505 ppm, 40 to 505 ppm, 45 to 505 ppm, 50 to 505 ppm, 55 to 505 ppm, 20 to 500 ppm, 25 to 500 ppm, 30 to 500 ppm, 35 to 500 ppm, 40 to 500 ppm, 45 to 500 ppm, 50 to 500 ppm, 55 to 500 ppm, 20 to 495 ppm, 25 to 495 ppm, 30 to 495 ppm, 35 to 495 ppm, 40 to 495 ppm, 45 to 495 ppm, 50 to 495 ppm, 55 to 495 ppm, 20 to 490 ppm, 25 to 490 ppm, 30 to 490 ppm, 35 to 490 ppm, 40 to 490 ppm, 45 to 490 ppm, 50 to 490 ppm, 55 to 490 ppm, 100 to 400 ppm, 150 to 400 ppm, 200 to 400 ppm, 250 to 400 ppm, 300 to 400 ppm, 100 to 150 ppm, 100 to 200 ppm, 100 to 250 ppm, or 100 to 300 ppm. The beverage having the content of the steviol glycoside in this range can be provided with moderate sweetness. The dilution ratio of the beverage precursor may be set such that the content of the steviol glycoside in the beverage falls within the range described above.

The content of the rebaudioside M in the beverage is preferably 1 to 800 ppm and may be, for example, 20 to 750 ppm, 20 to 700 ppm, 20 to 650 ppm, 20 to 600 ppm, 20 to 550 ppm, 25 to 550 ppm, 30 to 550 ppm, 35 to 550 ppm, 40 to 550 ppm, 45 to 550 ppm, 50 to 550 ppm, 55 to 550 ppm, 20 to 540 ppm, 25 to 540 ppm, 30 to 540 ppm, 35 to 540 ppm, 40 to 540 ppm, 45 to 540 ppm, 50 to 540 ppm, 55 to 540 ppm, 20 to 530 ppm, 25 to 530 ppm, 30 to 530 ppm, 35 to 530 ppm, 40 to 530 ppm, 45 to 530 ppm, 50 to 530 ppm, 55 to 530 ppm, 20 to 520 ppm, 25 to 520 ppm, 30 to 520 ppm, 35 to 520 ppm, 40 to 520 ppm, 45 to 520 ppm, 50 to 520 ppm, 55 to 520 ppm, 20 to 510 ppm, 25 to 510 ppm, 30 to 510 ppm, 35 to 510 ppm, 40 to 510 ppm, 45 to 510 ppm, 50 to 510 ppm, 55 to 510 ppm, 20 to 505 ppm, 25 to 505 ppm, 30 to 505 ppm, 35 to 505 ppm, 40 to 505 ppm, 45 to 505 ppm, 50 to 505 ppm, 55 to 505 ppm, 20 to 500 ppm, 25 to 500 ppm, 30 to 500 ppm, 35 to 500 ppm, 40 to 500 ppm, 45 to 500 ppm, 50 to 500 ppm, 55 to 500 ppm, 20 to 495 ppm, 25 to 495 ppm, 30 to 495 ppm, 35 to 495 ppm, 40 to 495 ppm, 45 to 495 ppm, 50 to 495 ppm, 55 to 495 ppm, 20 to 490 ppm, 25 to 490 ppm, 30 to 490 ppm, 35 to 490 ppm, 40 to 490 ppm, 45 to 490 ppm, 50 to 490 ppm, 55 to 490 ppm, 100 to 400 ppm, 150 to 400 ppm, 200 to 400 ppm, 250 to 400 ppm, 300 to 400 ppm, 100 to 150 ppm, 100 to 200 ppm, 100 to 250 ppm, or 100 to 300 ppm. The beverage having the content of the rebaudioside M in this range can be provided with moderate sweetness. The dilution ratio of the beverage precursor may be set such that the content of the rebaudioside M in the beverage falls within the range described above.

The beverage according to one aspect of the present invention may comprise rebaudioside A, and the content of the rebaudioside A may be, for example, 1 to 600 ppm, 1 to 500 ppm, 1 to 450 ppm, 1 to 400 ppm, 1 to 350 ppm, 1 to 300 ppm, 1 to 250 ppm, 1 to 200 ppm, 1 to 100 ppm, 1 to 60 ppm, 1 to 50 ppm, 1 to 40 ppm, 1 to 30 ppm, 1 to 20 ppm, 1 to 10 ppm, or 1 to 5 ppm.

The beverage according to one aspect of the present invention may comprise rebaudioside B, and the content of the rebaudioside B may be, for example, 1 to 300 ppm, 1 to 200 ppm, 1 to 150 ppm, 1 to 100 ppm, 1 to 80 ppm, 1 to 50 ppm, 1 to 30 ppm, or 1 to 10 ppm.

The beverage according to one aspect of the present invention may comprise rebaudioside C, and the content of the rebaudioside C may be, for example, 1 to 300 ppm, 1 to 200 ppm, 1 to 150 ppm, 1 to 100 ppm, 1 to 80 ppm, 1 to 50 ppm, 1 to 30 ppm, or 1 to 10 ppm.

The beverage according to one aspect of the present invention may comprise rebaudioside D, and the content of the rebaudioside D may be, for example, 1 to 600 ppm, 1 to 500 ppm, 1 to 450 ppm, 1 to 400 ppm, 1 to 350 ppm, 1 to 300 ppm, 1 to 250 ppm, 1 to 200 ppm, 1 to 100 ppm, 1 to 60 ppm, 1 to 50 ppm, 1 to 40 ppm, 1 to 30 ppm, 1 to 20 ppm, 1 to 10 ppm, or 1 to 5 ppm.

The beverage according to one aspect of the present invention may comprise rebaudioside E, and the content of the rebaudioside E may be, for example, 1 to 300 ppm, 1 to 200 ppm, 1 to 150 ppm, 1 to 100 ppm, 1 to 80 ppm, 1 to 50 ppm, 1 to 30 ppm, or 1 to 10 ppm.

The beverage according to one aspect of the present invention may comprise rebaudioside F, and the content of the rebaudioside F may be, for example, 1 to 300 ppm, 1 to 200 ppm, 1 to 150 ppm, 1 to 100 ppm, 1 to 80 ppm, 1 to 50 ppm, 1 to 30 ppm, or 1 to 10 ppm.

The beverage according to one aspect of the present invention may comprise rebaudioside G, and the content of the rebaudioside G may be, for example, 1 to 300 ppm, 1 to 200 ppm, 1 to 150 ppm, 1 to 100 ppm, 1 to 80 ppm, 1 to 50 ppm, 1 to 30 ppm, or 1 to 10 ppm.

The beverage according to one aspect of the present invention may comprise rebaudioside I, and the content of the rebaudioside I may be, for example, 1 to 300 ppm, 1 to 200 ppm, 1 to 150 ppm, 1 to 100 ppm, 1 to 80 ppm, 1 to 50 ppm, 1 to 30 ppm, or 1 to 10 ppm.

The beverage according to one aspect of the present invention may comprise rebaudioside J, and the content of the rebaudioside J may be, for example, 1 to 300 ppm, 1 to 200 ppm, 1 to 150 ppm, 1 to 100 ppm, 1 to 80 ppm, 1 to 50 ppm, 1 to 30 ppm, or 1 to 10 ppm.

The beverage according to one aspect of the present invention may comprise rebaudioside K, and the content of the rebaudioside K may be, for example, 1 to 300 ppm, 1 to 200 ppm, 1 to 150 ppm, 1 to 100 ppm, 1 to 80 ppm, 1 to 50 ppm, 1 to 30 ppm, or 1 to 10 ppm.

The beverage according to one aspect of the present invention may comprise rebaudioside N, and the content of the rebaudioside N may be, for example, 1 to 300 ppm, 1 to 200 ppm, 1 to 150 ppm, 1 to 100 ppm, 1 to 80 ppm, 1 to 50 ppm, 1 to 30 ppm, or 1 to 10 ppm.

The beverage according to one aspect of the present invention may comprise rebaudioside O, and the content of the rebaudioside O may be, for example, 1 to 300 ppm, 1 to 200 ppm, 1 to 150 ppm, 1 to 100 ppm, 1 to 80 ppm, 1 to 50 ppm, 1 to 30 ppm, or 1 to 10 ppm.

The beverage according to one aspect of the present invention may comprise rebaudioside Q, and the content of the rebaudioside Q may be, for example, 1 to 300 ppm, 1 to 200 ppm, 1 to 150 ppm, 1 to 100 ppm, 1 to 80 ppm, 1 to 50 ppm, 1 to 30 ppm, or 1 to 10 ppm.

The beverage according to one aspect of the present invention may comprise rebaudioside R, and the content of the rebaudioside R may be, for example, 1 to 300 ppm, 1 to 200 ppm, 1 to 150 ppm, 1 to 100 ppm, 1 to 80 ppm, 1 to 50 ppm, 1 to 30 ppm, or 1 to 10 ppm.

The beverage according to one aspect of the present invention may comprise dulcoside A, and the content of the dulcoside A may be, for example, 1 to 300 ppm, 1 to 200 ppm, 1 to 150 ppm, 1 to 100 ppm, 1 to 80 ppm, 1 to 50 ppm, 1 to 30 ppm, or 1 to 10 ppm.

The beverage according to one aspect of the present invention may comprise dulcoside C, and the content of the dulcoside C may be, for example, 1 to 300 ppm, 1 to 200 ppm, 1 to 150 ppm, 1 to 100 ppm, 1 to 80 ppm, 1 to 50 ppm, 1 to 30 ppm, or 1 to 10 ppm.

The beverage according to one aspect of the present invention may comprise rubusoside, and the content of the rubusoside may be, for example, 1 to 300 ppm, 1 to 200 ppm, 1 to 150 ppm, 1 to 100 ppm, 1 to 80 ppm, 1 to 50 ppm, 1 to 30 ppm, or 1 to 10 ppm.

The beverage according to one aspect of the present invention may comprise steviol monoside, and the content of the steviol monoside may be, for example, 1 to 300 ppm, 1 to 200 ppm, 1 to 150 ppm, 1 to 100 ppm, 1 to 80 ppm, 1 to 50 ppm, 1 to 30 ppm, or 1 to 10 ppm.

The beverage according to one aspect of the present invention may comprise steviol bioside, and the content of the steviol bioside may be, for example, 1 to 300 ppm, 1 to 200 ppm, 1 to 150 ppm, 1 to 100 ppm, 1 to 80 ppm, 1 to 50 ppm, 1 to 30 ppm, or 1 to 10 ppm.

The beverage according to one aspect of the present invention may comprise stevioside, and the content of the stevioside may be, for example, 1 to 300 ppm, 1 to 200 ppm, 1 to 150 ppm, 1 to 100 ppm, 1 to 80 ppm, 1 to 50 ppm, 1 to 30 ppm, or 1 to 10 ppm.

The content of the D-allulose in the beverage is preferably 0.1 to 5% by weight and may be, for example, 0.1 to 4% by weight, 0.1 to 3.5% by weight, 0.1 to 3% by weight, 0.1 to 2.9% by weight, 0.1 to 2.8% by weight, 0.1 to 2.7% by weight, 0.1 to 2.6% by weight, 0.1 to 2.5% by weight, 0.1 to 2.4% by weight, 0.1 to 2.3% by weight, 0.1 to 2.2% by weight, 0.1 to 2.1% by weight, 0.1 to 2% by weight, 0.5 to 5% by weight, 0.5 to 4% by weight, 0.5 to 3.5% by weight, 0.5 to 3% by weight, 0.5 to 2.9% by weight, 0.5 to 2.8% by weight, 0.5 to 2.7% by weight, 0.5 to 2.6% by weight, %0.5 to 2.5% by weight, 0.5 to 2.4% by weight, 0.5 to 2.3% by weight, 0.5 to 2.2% by weight, 0.5 to 2.1% by weight, 0.5 to 2% by weight, 0.7 to 5% by weight, 0.7 to 4% by weight, 0.7 to 3.5% by weight, 0.7 to 3% by weight, 0.7 to 2.9% by weight, 0.7 to 2.8% by weight, 0.7 to 2.7% by weight, 0.7 to 2.6% by weight, 0.7 to 2.5% by weight, 0.7 to 2.4% by weight, 0.7 to 2.3% by weight, 0.7 to 2.2% by weight, 0.7 to 2.1% by weight, 0.7 to 2% by weight, 1 to 5% by weight, 1 to 4% by weight, 1 to 3.5% by weight, 1 to 3% by weight, 1 to 2.9% by weight, 1 to 2.8% by weight, 1 to 2.7% by weight, 1 to 2.6% by weight, 1 to 2.5% by weight, 1 to 2.4% by weight, 1 to 2.3% by weight, 1 to 2.2% by weight, 1 to 2.1% by weight, or 1 to 2% by weight. The sweetness of the beverage having the content of the D-allulose in this range can be natural sweetness close to sugar. The dilution ratio of the beverage precursor may be set such that the content of the D-allulose in the beverage falls within the range described above.

The pH of the beverage is not particularly limited and may be 2.5 to 6.0. The beverage does not have too strong sourness when the pH is 2.5 or higher, and also maintains a clean finish when the pH is 6.0 or lower. In some aspects, the pH of the beverage is 2.5 to 4.0. When the pH falls within this range, the emergence of microbes and the like during preservation is prevented and a clean taste can be provided. In other aspects of the present invention, the pH of the beverage may be, for example, 3.0 to 4.5, 2.6 to 3.9, 2.7 to 3.8, 2.8 to 3.7, 2.9 to 3.6, or 3.0 to 3.5. The beverage having pH of higher than 4.0 can be prevented from being microbially deteriorated during preservation, for example, by carrying out filling and sealing steps in a sterile environment.

In one aspect of the present invention, the beverage may contain a sweetener other than steviol glycoside and D-allulose. Such a sweetener is not particularly limited, and the beverage may further contain one or more sweeteners selected from the group consisting of, for example, sucrose, fructose corn syrup, erythritol, mogroside V, corn syrup, aspartame (also called L-phenylalanine compound), sucralose, acesulfame potassium, saccharin, and xylitol. Among them, a natural sweetener is preferably used from the viewpoint of conferring cleanliness, drinkability, a natural taste, and a moderate rich taste. Particularly, fructose corn syrup, sucrose, or corn syrup is suitably used. Only one type of these sweet components may be used, or plural types thereof may be used. Such a sweetener may be contained in an amount that corresponds to Brix of, for example, 5.0 or less, 4.5 or less, 4.0 or less, 3.5 or less, 3.0 or less, 2.5 or less, 2.0 or less, 1.5 or less, 1.0 or less, or 0.5 or less, based on sucrose in the beverage, and the lower limit value may be 0.1 or more.

When the beverage is a sparkling beverage, the gas pressure may be 2.2 kgf/cm² to 5.0 kgf/cm². In some aspects, the gas pressure of the sparkling beverage may be, for example, 2.2 kgf/cm² to 4.5 kgf/cm², 2.2 kgf/cm² to 4.0 kgf/cm², 2.2 kgf/cm² to 3.5 kgf/cm², 2.2 kgf/cm² to 3.3 kgf/cm², 2.2 kgf/cm² to 3.2 kgf/cm², 2.3 kgf/cm² to 4.0 kgf/cm², 2.3 kgf/cm² to 3.5 kgf/cm², 2.3 kgf/cm² to 3.2 kgf/cm², 3.0 kgf/cm² to 4.0 kgf/cm², or 3.0 kgf/cm² to 3.5 kgf/cm². The content of the gas in the sparkling beverage can be determined by the gas pressure. In the present specification, the term "gas pressure" refers to the gas pressure of carbon dioxide gas in the beverage after the liquid temperature of the sparkling beverage in a container is set to 20°C, followed by the atmospheric relief of air in a headspace (snift) once, unless otherwise specified. The gas pressure can be measured by fixing the beverage with its liquid temperature set to 20°C to a gas internal pressure meter, once draining carbon dioxide gas in a headspace by atmospheric relief through the opening of a stopper cock of the gas internal pressure meter and then closing again the stopper cock, and reading a value at which an indicator reaches a certain position during shaking and moving of the gas internal pressure meter. In the present specification, the gas pressure of the sparkling beverage is measured by use of this method, unless otherwise specified.

The Brix based on sucrose of the beverage is not particularly limited and is preferably 1 to 15, more preferably 3 to 14, further preferably 5 to 13, particularly preferably 7 to 11. The Brix can be calculated from a known degree of sweetness of each sweetener such as steviol glycoside relative to sucrose and the content of each sweetener. The relative ratio of the sweetness of each sweetener to the sweetness of sucrose defined as 1 can be determined from, for example, a known sugar sweetness conversion table (e.g., information "Beverage term dictionary", page 11, Beverage Japan, Inc.). As for a sweetener whose sweetness value is described as a numeric range or differs among literatures, the relative ratio of the sweetness to the sweetness of sucrose defined as 1 can be determined by a sensory test. Examples of such a sensory test include a method of adding sugar to pure water so that Brix is from 3.0 to 5.0 by 0.5 to prepare samples, and selecting therefrom a sugar-supplemented sample having a sweetness intensity equivalent to that of an aqueous solution having a predetermined concentration of a sweetener.

The beverage may contain an alcohol. Although an alcoholic beverage is a beverage containing an alcohol, the alcohol determined in this context means ethyl alcohol (ethanol), as mentioned above, unless otherwise specified. The alcoholic beverage is not particularly limited by its type as long as an alcohol is contained therein. The alcoholic beverage may be a beverage having an alcohol content of 0.05 to 40 v/v%, 1.0 to 10 v/v%, 2.0 to 9.0 v/v%, or 3.0 to 8.0 v/v%, such as beer, sparkling liquor, Chuhai (shochu mixed with soda water), or cocktail, or may be a beverage having an alcohol content of less than 0.05 v/v%, such as nonalcoholic beer, a Chuhai taste beverage, or a soft beverage. In some aspects, the beverage preferably has an alcohol content of less than 0.05 v/v%, more preferably 0.00 v/v%. In the present specification, the alcohol content is expressed by a percentage based on volume/volume (v/v%). The alcohol content in the beverage can be measured by any known method, and can be measured with, for example, an oscillating densitometer.

The flavor of the beverage is not particularly limited and can be adjusted to various flavors. For example, the beverage may be an orange-flavored, lemon-flavored, lime-flavored, grape-flavored, ginger ale-flavored, cassis-flavored, green tea-flavored, oolong tea-flavored, English tea-flavored, coffee-flavored, or cola-flavored beverage. The flavor of the beverage of the present invention can be adjusted by adding a component that is approved as a food additive such as a fruit juice, an acidulant, a flavor, plant extracts, a dairy product, and other flavor, or a component that, even if not approved, has been eaten since early times and is generally recognized to be safe.

The beverage may be supplemented with various additives without impairing the advantageous effects of the present invention. Examples of such an additive can include acidulants, fragrances, vitamins, dyes, antioxidants, emulsifiers, preservatives, seasonings, extracts, pH adjusters, and quality stabilizers.

The energy (total energy) of the beverage is not particularly limited and may be, for example, 0 to 50 Kcal/100 ml, 0 to 45 Kcal/100 ml, 0 to 40 Kcal/100 ml, 0 to 35 Kcal/100 ml, 0 to 30 Kcal/100 ml, 0 to 24 Kcal/100 ml, 0 to 22 Kcal/100 ml, 0 to 20 Kcal/100 ml, 0 to 15 Kcal/100 ml, 0 to 10 Kcal/100 ml, 0 to 5 Kcal/100 ml, 0.1 to 50 Kcal/100 ml, 0.1 to 45 Kcal/100 ml, 0.1 to 40 Kcal/100 ml, 0.1 to 35 Kcal/100 ml, 0.1 to 30 Kcal/100 ml, 0.1 to 24 Kcal/100 ml, 0.1 to 22 Kcal/100 ml, 0.1 to 20 Kcal/100 ml, 0.1 to 15 Kcal/100 ml, 0.1 to 10 Kcal/100 ml, 0.1 to 5 Kcal/100 ml, 1 to 50 Kcal/100 ml, 1 to 45 Kcal/100 ml, 1 to 40 Kcal/100 ml, 1 to 35 Kcal/100 ml, 1 to 30 Kcal/100 ml, 1 to 24 Kcal/100 ml, 1 to 22 Kcal/100 ml, 1 to 20 Kcal/100 ml, 1 to 15 Kcal/100 ml, 1 to 10 Kcal/100 ml, 1 to 5 Kcal/100 ml, 5 to 50 Kcal/100 ml, 5 to 45 Kcal/100 ml, 5 to 40 Kcal/100 ml, 5 to 35 Kcal/100 ml, 5 to 30 Kcal/100 ml, 5 to 24 Kcal/100 ml, 5 to 20 Kcal/100 ml, 5 to 15 Kcal/100 ml, 5 to 10 Kcal/100 ml, 10 to 50 Kcal/100 ml, 10 to 45 Kcal/100 ml, 10 to 40 Kcal/100 ml, 10 to 35 Kcal/100 ml, 10 to 30 Kcal/100 ml, 10 to 24 Kcal/100 ml, 10 to 20 Kcal/100 ml, 10 to 15 Kcal/100 ml, 15 to 50 Kcal/100 ml, 15 to 45 Kcal/100 ml, 15 to 40 Kcal/100 ml, 15 to 35 Kcal/100 ml, 15 to 30 Kcal/100 ml, 15 to 24 Kcal/100 ml, 15 to 20 Kcal/100 ml, 20 to 50 Kcal/100 ml, 20 to 45 Kcal/100 ml, 20 to 40 Kcal/100 ml, 20 to 35 Kcal/100 ml, 20 to 30 Kcal/100 ml, 20 to 24 Kcal/100 ml, 24 to 50 Kcal/100 ml, 24 to 45 Kcal/100 ml, 24 to 40 Kcal/100 ml, 24 to 35 Kcal/100 ml, or 24 to 30 Kcal/100 ml.

### 4. Method for suppressing foaming of steviol glycoside solution

The present invention also relates to a method for suppressing the foaming of a steviol glycoside solution. Specifically, the present invention relates to a method for suppressing the foaming of a steviol glycoside solution, comprising adding, to the solution, 0.5 to 25 parts by weight of D-allulose per 100 parts by weight of the solution.

In the present specification, the phrase "adding, to the solution, 0.5 to 25 parts by weight of D-allulose per 100 parts by weight of the solution" means allowing the steviol glycoside solution mentioned in the section "1. Method for producing steviol glycoside solution" to contain a predetermined amount of D-allulose. The method for allowing the steviol glycoside solution to contain D-allulose is not particularly limited. The steviol glycoside solution can be allowed to contain a predetermined amount of D-allulose in the same manner as the method mentioned in the section "1. Method for producing steviol glycoside solution".

The amount of the D-allulose added may be, for example, 1.0 to 25 parts by weight, 1.5 to 25 parts by weight, 2.0 to 25 parts by weight, 2.5 to 25 parts by weight, 3.0 to 25 parts by weight, 3.5 to 25 parts by weight, 4.0 to 25 parts by weight, 0.5 to 20 parts by weight, 1.0 to 20 parts by weight, 1.5 to 20 parts by weight, 2.0 to 20 parts by weight, 2.5 to 20 parts by weight, 3.0 to 20 parts by weight, 3.5 to 20 parts by weight, 4.0 to 20 parts by weight, 0.5 to 15 parts by weight, 1.0 to 15 parts by weight, 1.5 to 15 parts by weight, 2.0 to 15 parts by weight, 2.5 to 15 parts by weight, 3.0 to 15 parts by weight, 3.5 to 15 parts by weight, 4.0 to 15 parts by weight, 0.5 to 10 parts by weight, 1.0 to 10 parts by weight, 1.5 to 10 parts by weight, 2.0 to 10 parts by weight, 2.5 to 10 parts by weight, 3.0 to 10 parts by weight, 3.5 to 10 parts by weight, or 4.0 to 10 parts by weight per 100 parts by weight of the solution. The addition of the D-allulose in the range described above can effectively suppress the foaming of the steviol glycoside solution. The D-allulose used may be obtained by treatment such as extraction from a plant of the genus *Itea* or may be obtained by the enzymatic conversion of D-fructose, or a known preparation containing the D-allulose may be purchased and used.

### [Exemplary aspect of present invention]

One aspect of the present invention provides a method for producing a steviol glycoside solution, comprising
adding, to a solvent, steviol glycoside and 0.5 to 25 parts by weight of D-allulose per 100 parts by weight of the solvent, wherein
a content of the steviol glycoside in the steviol glycoside solution is 100 to 5000 ppm. In this aspect, the content of the steviol glycoside may be 200 to 5000 ppm, 200 to 4000 ppm, 200 to 3000 ppm, 250 to 5000 ppm, 250 to 4000 ppm, 250 to 3000 ppm, 300 to 5000 ppm, 300 to 4000 ppm, or 300 to 3000 ppm.

One aspect of the present invention provides a method for producing a steviol glycoside solution, comprising
adding, to a solvent, steviol glycoside and 0.5 to 25 parts by weight of D-allulose per 100 parts by weight of the solvent, wherein
a weight ratio of D-allulose/steviol glycoside in the steviol glycoside solution is 1 to 2500. In this aspect, the weight ratio of D-allulose/steviol glycoside may be 20 to 500, 20 to 450, 20 to 400, 20 to 350, 20 to 300, 20 to 270, 20 to 250, 20 to 200, 25 to 500, 25 to 450, 25 to 400, 25 to 350, 25 to 300, 25 to 270, 25 to 250, 25 to 200, 27 to 500, 27 to 450, 27 to 400, 27 to 350, 27 to 300, 27 to 270, 27 to 250, or 27 to 200.

One aspect of the present invention provides a method for producing a steviol glycoside solution, comprising
adding, to a solvent, rebaudioside M and 0.5 to 25 parts by weight of D-allulose per 100 parts by weight of the solvent, wherein
a content of the rebaudioside M in the steviol glycoside solution is 100 to 5000 ppm. In this aspect, the content of the rebaudioside M may be 200 to 5000 ppm, 200 to 4000 ppm, 200 to 3000 ppm, 250 to 5000 ppm, 250 to 4000 ppm, 250 to 3000 ppm, 300 to 5000 ppm, 300 to 4000 ppm, or 300 to 3000 ppm.

One aspect of the present invention provides a method for producing a steviol glycoside solution, comprising
adding, to a solvent, rebaudioside M and 0.5 to 25 parts by weight of D-allulose per 100 parts by weight of the solvent, wherein
a weight ratio of D-allulose/rebaudioside M in the steviol glycoside solution is 1 to 2500. In this aspect, the weight ratio of D-allulose/steviol glycoside may be 20 to 500, 20 to 450, 20 to 400, 20 to 350, 20 to 300, 20 to 270, 20 to 250, 20 to 200, 25 to 500, 25 to 450, 25 to 400, 25 to 350, 25 to 300, 25 to 270, 25 to 250, 25 to 200, 27 to 500, 27 to 450, 27 to 400, 27 to 350, 27 to 300, 27 to 270, 27 to 250, or 27 to 200.

One aspect of the present invention provides a method for producing a steviol glycoside solution, comprising
adding, to a solvent, steviol glycoside and 0.5 to 25 parts by weight of D-allulose per 100 parts by weight of the solvent, wherein
the steviol glycoside comprises rebaudioside D and rebaudioside M, and
a total content of the rebaudioside D and the rebaudioside M in the steviol glycoside solution is 100 to 5000 ppm. In this aspect, the total content of the rebaudioside D and the rebaudioside M may be 200 to 5000 ppm, 200 to 4000 ppm, 200 to 3000 ppm, 250 to 5000 ppm, 250 to 4000 ppm, 250 to 3000 ppm, 300 to 5000 ppm, 300 to 4000 ppm, or 300 to 3000 ppm.

One aspect of the present invention provides a method for producing a steviol glycoside solution, comprising
adding, to a solvent, steviol glycoside and 0.5 to 25 parts by weight of D-allulose per 100 parts by weight of the solvent, wherein
the steviol glycoside comprises rebaudioside D and rebaudioside M, and
a weight ratio of D-allulose/(rebaudioside D + rebaudioside M) in the steviol glycoside solution is 1 to 2500. In this aspect, the weight ratio of D-allulose/(rebaudioside D + rebaudioside M) may be 20 to 500, 20 to 450, 20 to 400, 20 to 350, 20 to 300, 20 to 270, 20 to 250, 20 to 200, 25 to 500, 25 to 450, 25 to 400, 25 to 350, 25 to 300, 25 to 270, 25 to 250, 25 to 200, 27 to 500, 27 to 450, 27 to 400, 27 to 350, 27 to 300, 27 to 270, 27 to 250, or 27 to 200.

One aspect of the present invention provides a beverage precursor comprising steviol glycoside and D-allulose, wherein
100 to 5000 ppm of the steviol glycoside and 0.5 to 25% by weight of the D-allulose are contained based on the total weight of the beverage precursor, and
a weight ratio of D-allulose/steviol glycoside in the beverage precursor is 1 to 2500. In this aspect, the weight ratio of D-allulose/steviol glycoside may be 20 to 500, 20 to 450, 20 to 400, 20 to 350, 20 to 300, 20 to 270, 20 to 250, 20 to 200, 25 to 500, 25 to 450, 25 to 400, 25 to 350, 25 to 300, 25 to 270, 25 to 250, 25 to 200, 27 to 500, 27 to 450, 27 to 400, 27 to 350, 27 to 300, 27 to 270, 27 to 250, or 27 to 200.

One aspect of the present invention provides a beverage precursor comprising rebaudioside M and D-allulose, wherein
100 to 5000 ppm of the rebaudioside M and 0.5 to 25% by weight of the D-allulose are contained based on the total weight of the beverage precursor, and
a weight ratio of D-allulose/rebaudioside M in the beverage precursor is 1 to 2500. In this aspect, the weight ratio of D-allulose/rebaudioside M may be 20 to 500, 20 to 450, 20 to 400, 20 to 350, 20 to 300, 20 to 270, 20 to 250, 20 to 200, 25 to 500, 25 to 450, 25 to 400, 25 to 350, 25 to 300, 25 to 270, 25 to 250, 25 to 200, 27 to 500, 27 to 450, 27 to 400, 27 to 350, 27 to 300, 27 to 270, 27 to 250, or 27 to 200.

One aspect of the present invention provides a beverage precursor comprising steviol glycoside and D-allulose, wherein
100 to 5000 ppm of the steviol glycoside and 0.5 to 25% by weight of the D-allulose are contained based on the total weight of the beverage precursor,
the steviol glycoside comprises rebaudioside D and rebaudioside M, and
a weight ratio of D-allulose/(rebaudioside D + rebaudioside M) in the beverage precursor is 1 to 2500. In this aspect, the weight ratio of D-allulose/(rebaudioside D + rebaudioside M) may be 20 to 500, 20 to 450, 20 to 400, 20 to 350, 20 to 300, 20 to 270, 20 to 250, 20 to 200, 25 to 500, 25 to 450, 25 to 400, 25 to 350, 25 to 300, 25 to 270, 25 to 250, 25 to 200, 27 to 500, 27 to 450, 27 to 400, 27 to 350, 27 to 300, 27 to 270, 27 to 250, or 27 to 200.

Hereinafter, the present invention will be described more specifically with reference to Examples. However, the present invention is not limited by these Examples.

### Examples

### [Example A] Evaluation of suppression of foaming of solution containing high concentration of Reb.M

Aqueous solutions containing rebaudioside M and/or D-allulose at the concentrations described in Table 1 below were evaluated for the suppression of their foaming. The starting materials and the instruments used were described below. The contents of the rebaudioside M and the D-allulose in Table 1 were calculated from the amounts of the rebaudioside M and the D-allulose added. The same holds true for the tables given below.
(Starting material)
   Water (solvent): ion-exchange water
   Reb.M: purity: 90% or more
   D-allulose: purity: 99% or more
(Instrument used)
   1000 mL measuring cylinder (manufactured by IWAKI/ AGC Techno Glass Co., Ltd., inside diameter: 65.2 mm)
   Sextuple stirrer (manufactured by AS ONE Corp., HSH-6D)
   Rotor (manufactured by AS ONE Corp., 38 × 8 mm)

**[Table 1]**

| Example | 1 | 2 | 3 | 4 | 5 | 6 | 7 | 8 |
|---|---|---|---|---|---|---|---|---|
| Reb.M (ppm) | 1000 | 2000 | 3000 | 1000 | 1000 | 2000 | 3000 | 3000 |
| D-Allulose (% by weight) | 0 | 0 | 0 | 4 | 8 | 8 | 8 | 20 |

The suppression of the foaming of the aqueous solutions of Examples 1 to 8 was evaluated in accordance with the following steps (1) to (5).
(1) Steviol glycoside and/or D-allulose was added at a predetermined concentration based on a weight to water to prepare an aqueous solution.
(2) 50 mL of the prepared aqueous solution and a rotor were placed in a 1000 mL measuring cylinder, and the height of the liquid level was read and recorded.
(3) Bubbles were generated by stirring at 1300 rpm for 5 minutes with a stirrer, and the stirring was terminated 5 minutes later.
(4) The point in time when the rotor stopped was defined as the starting time of measurement, and the calibration of the highest portion of the bubbles formed in the measuring cylinder was read and recorded.
(5) Then, the height of the bubbles was read and recorded by the same method as in the step (4) every 5 seconds, and the height of the bubbles was measured until the measurement time reached 1 to 5 minutes.

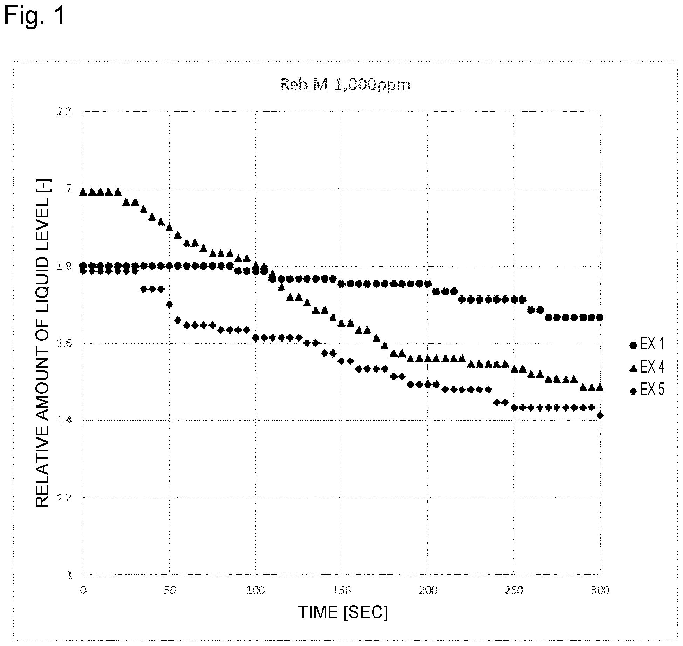

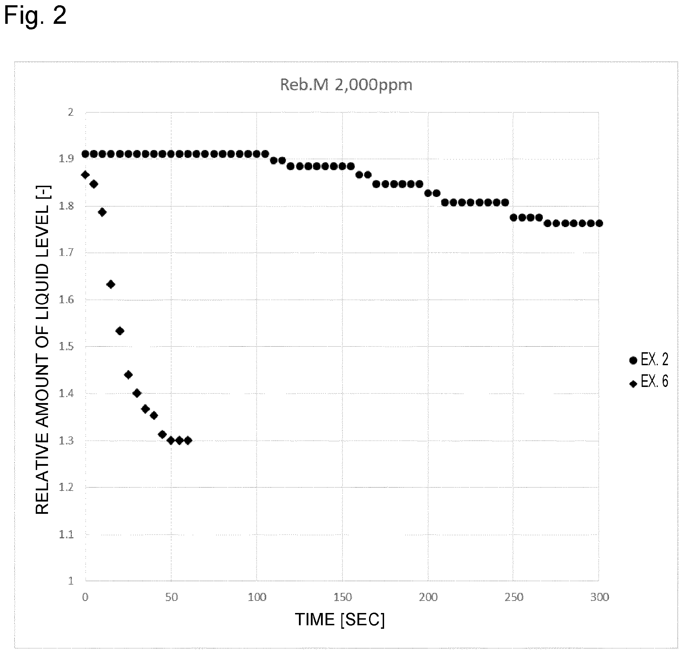

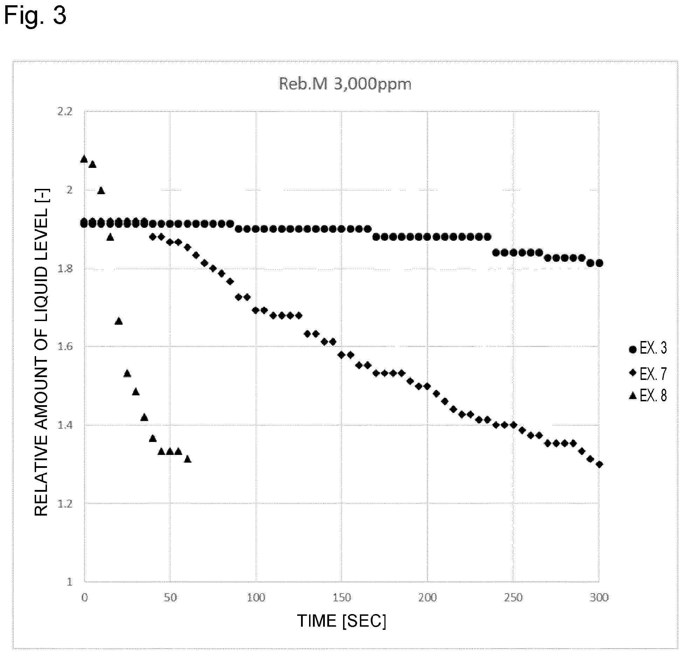

The results are shown in Figures 1 to 3. The results are a mean of N = 3 as to each standard. In each drawing, "Relative amount of liquid level" denotes the height of bubbles as a relative value in each example at each measurement time when the height of the liquid level measured in the step (2) is defined as 1 (the same holds true for the description below). From these results, it was confirmed that the foaming of the aqueous solution was suppressed in the samples supplemented with D-allulose as compared with the samples that was not supplemented with D-allulose. As for Example 6 (Figure 2) and Example 8 (Figure 3), the measurement was discontinued in 1 minute because the marked disappearance of bubbles was observed.

### [Example B] Evaluation of suppression of foaming of solution containing low concentration of Reb.M

Aqueous solutions containing rebaudioside M and/or D-allulose at the concentrations described in Table 2 below were evaluated for the suppression of their foaming by the same method as in Example A. The starting materials and the instruments were the same as in Example A.

**[Table 2]**

| Example | 9 | 10 | 11 | 12 | 13 |
|---|---|---|---|---|---|
| Reb.M (ppm) | 300 | 300 | 300 | 300 | 300 |
| D-Allulose (% by weight) | 0 | 1 | 2 | 4 | 8 |

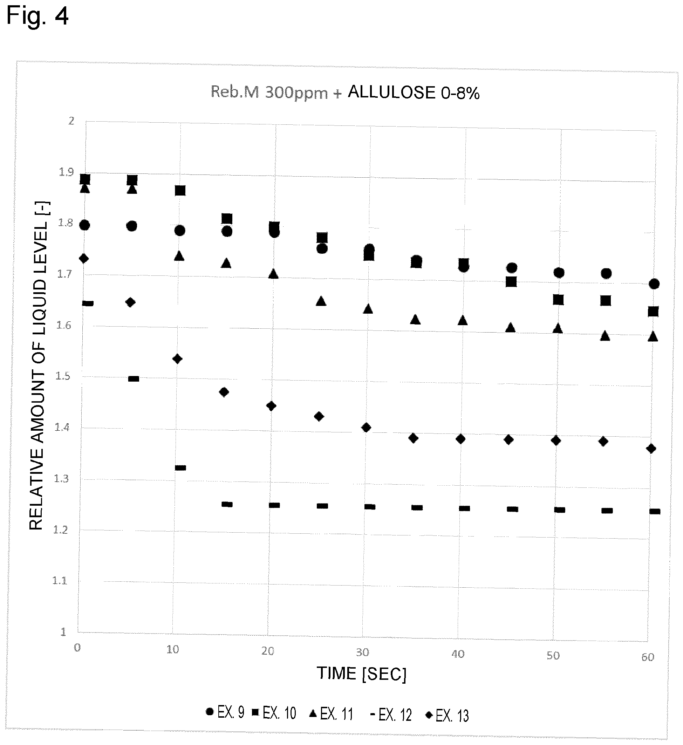

The results are shown in Figure 4. The results are a mean of N = 3 to 5 as to each standard. From these results, it was confirmed that the foaming of the aqueous solution was suppressed in the samples supplemented with D-allulose as compared with the samples that was not supplemented with D-allulose.

### [Example C] Evaluation of suppression of foaming of solution containing varying concentrations of Reb.M

Aqueous solutions containing rebaudioside M and/or D-allulose at the concentrations described in Table 3 below were evaluated for the suppression of their foaming by the same method as in Example A. The starting materials and the instruments were the same as in Example A.

**[Table 3]**

| Example | 14 | 15 | 16 | 17 | 18 | 19 | 20 | 21 |
|---|---|---|---|---|---|---|---|---|
| Reb.M (ppm) | 50 | 100 | 400 | 600 | 50 | 100 | 400 | 600 |
| D-Allulose (% by weight) | 0 | 0 | 0 | 0 | 2 | 2 | 2 | 2 |

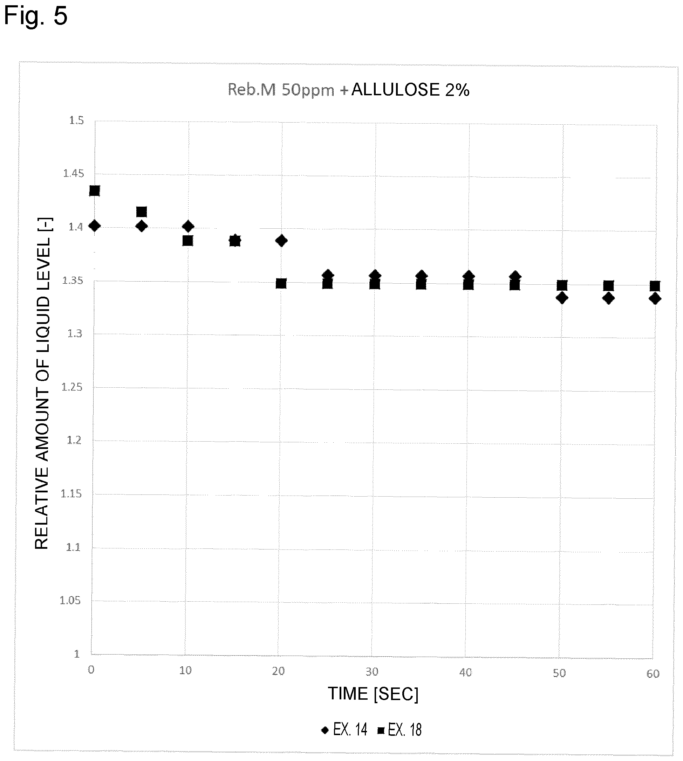

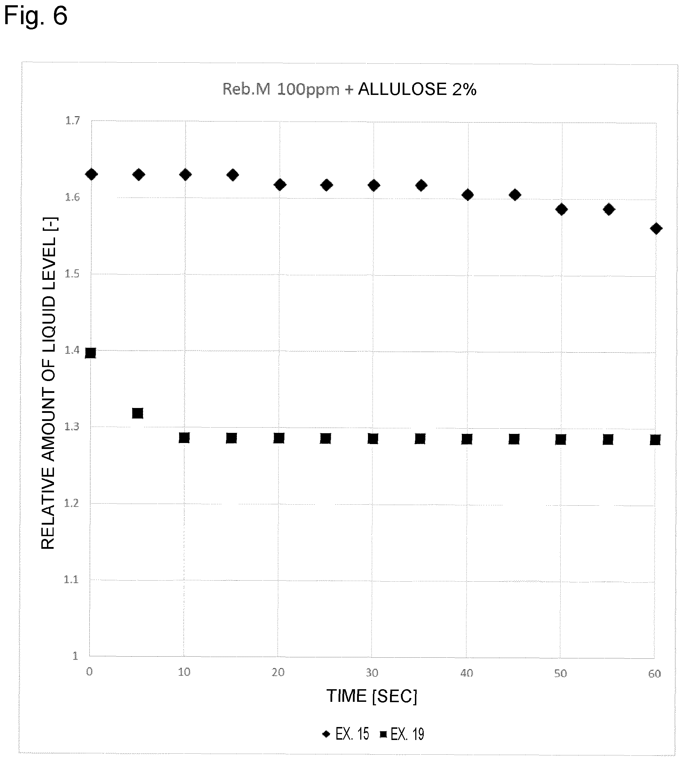

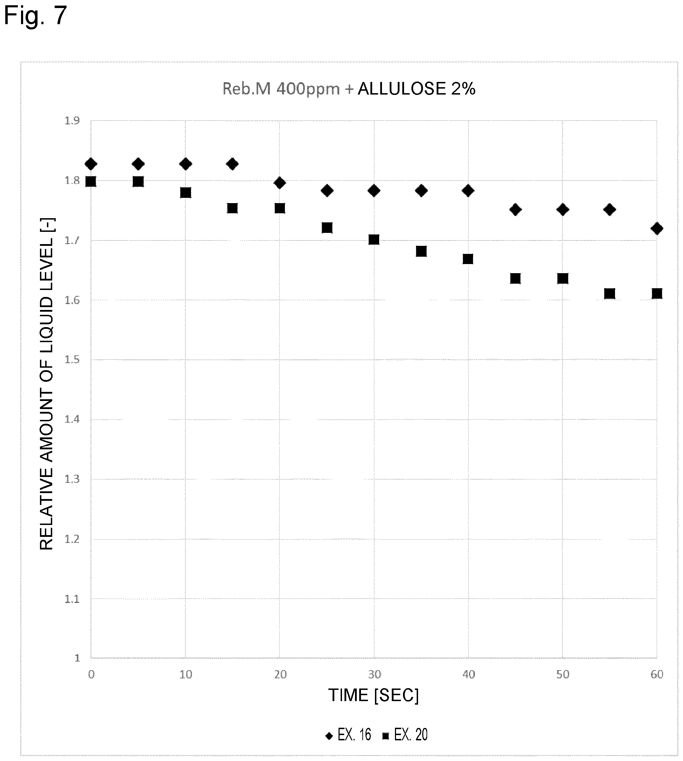

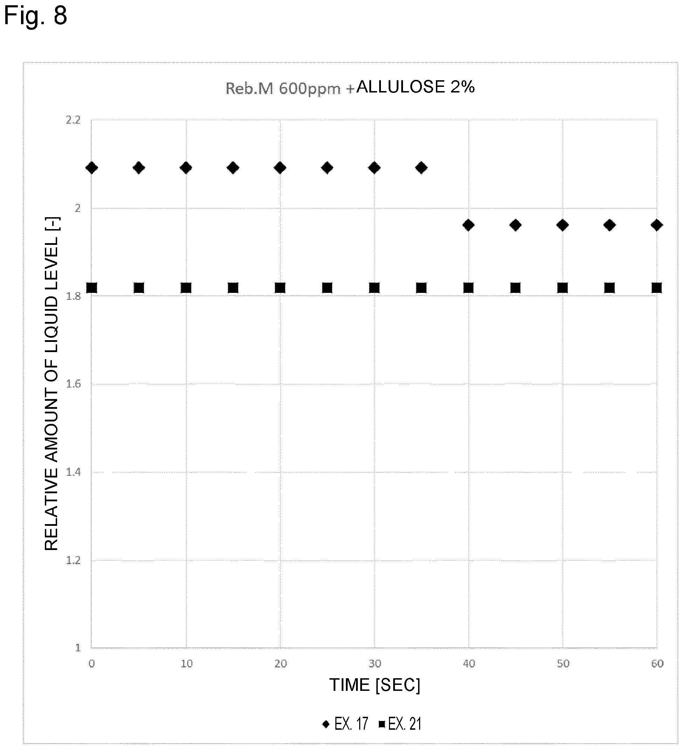

The results are shown in Figures 5 to 8. The results are a mean of N = 3 as to each standard. From these results, it was confirmed that the foaming of the aqueous solution was suppressed in the samples supplemented with D-allulose as compared with the samples that was not supplemented with D-allulose.

### [Example D] Evaluation of suppression of foaming of solution containing Reb.M and Reb.D

Aqueous solutions containing rebaudioside M, rebaudioside D, and/or D-allulose at the concentrations described in Table 4 below were evaluated for the suppression of their foaming by the same method as in Example A. The starting materials and the instruments were the same as in Example A except for rebaudioside D. (Starting material)
Reb.D: purity: 90% or more

**[Table 4]**

| Example | 22 | 23 | 24 | 25 |
|---|---|---|---|---|
| Reb.M (ppm) | 0 | 150 | 0 | 150 |
| Reb.D (ppm) | 300 | 150 | 300 | 150 |
| D-Allulose (% by weight) | 0 | 0 | 2 | 2 |

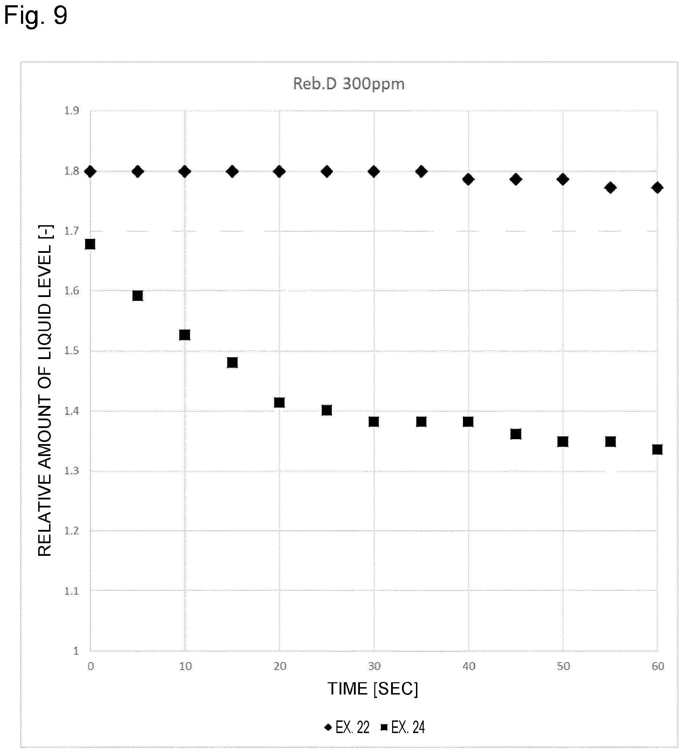

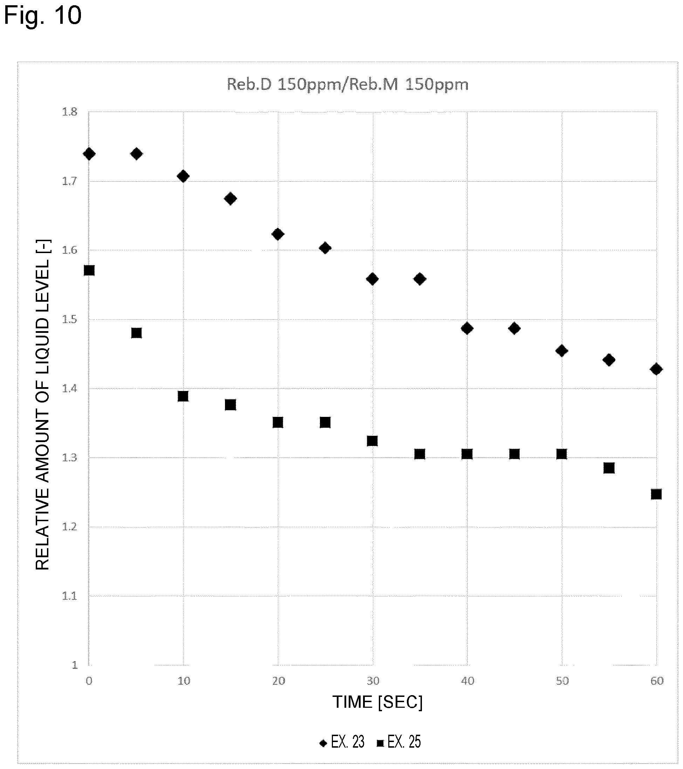

The results are shown in Figures 9 and 10. The results are a mean of N = 3 as to each standard. From these results, it was confirmed that the foaming of the aqueous solution was suppressed in the samples supplemented with D-allulose as compared with the samples that was not supplemented with D-allulose.

## Claims

1. A method for producing a steviol glycoside solution, comprising
adding, to a solvent, steviol glycoside and 0.5 to 25 parts by weight of D-allulose per 100 parts by weight of the solvent.

2. The method according to claim 1, wherein a content of the steviol glycoside in the steviol glycoside solution is 100 to 5000 ppm.

3. The method according to claim 1 or 2, wherein a weight ratio of D-allulose/steviol glycoside in the steviol glycoside solution is 1 to 2500.

4. The method according to any one of claims 1 to 3, further comprising diluting the steviol glycoside solution.

5. The method according to any one of claims 1 to 4, wherein the steviol glycoside is one or more selected from the group consisting of rebaudioside A, rebaudioside B, rebaudioside C, rebaudioside D, rebaudioside E, rebaudioside F, rebaudioside G, rebaudioside I, rebaudioside J, rebaudioside K, rebaudioside M, rebaudioside N, rebaudioside O, rebaudioside Q, rebaudioside R, dulcoside A, dulcoside C, rubusoside, steviol monoside, steviol bioside, and stevioside.

6. The method according to claim 5, wherein the steviol glycoside comprises rebaudioside M, and a purity of the rebaudioside M is 50 to 99.9%.

7. The method according to claim 5 or 6, wherein a content of the rebaudioside M in the steviol glycoside solution is 100 to 5000 ppm.

8. The method according to any one of claims 1 to 7, wherein the steviol glycoside solution is a food or drink product.

9. The method according to claim 8, wherein the food or drink product is a beverage.

10. A beverage precursor comprising steviol glycoside and D-allulose, wherein
100 to 5000 ppm of the steviol glycoside and 0.5 to 25% by weight of the D-allulose are contained based on the total weight of the beverage precursor.

11. The beverage precursor according to claim 10, wherein a weight ratio of D-allulose/steviol glycoside in the beverage precursor is 1 to 2500.

12. The beverage precursor according to claim 10 or 11, wherein the steviol glycoside is one or more selected from the group consisting of rebaudioside A, rebaudioside B, rebaudioside C, rebaudioside D, rebaudioside E, rebaudioside F, rebaudioside G, rebaudioside I, rebaudioside J, rebaudioside K, rebaudioside M, rebaudioside N, rebaudioside O, rebaudioside Q, rebaudioside R, dulcoside A, dulcoside C, rubusoside, steviol monoside, steviol bioside, and stevioside.

13. The beverage precursor according to claim 12, wherein the beverage precursor comprises rebaudioside M, and a purity of the rebaudioside M is 50 to 99.9%.

14. The beverage precursor according to claim 12 or 13, wherein a content of the rebaudioside M in the beverage precursor is 100 to 5000 ppm.

15. A beverage comprising the beverage precursor according to any one of claims 10 to 14 and a diluent.

16. A method for suppressing the foaming of a steviol glycoside solution, comprising adding, to the solution, 0.5 to 25 parts by weight of D-allulose per 100 parts by weight of the solution.
